# EUROPEAN PATENT APPLICATION

(11) **EP 4 716 239 A1**
(43) Date of publication of application: **25.03.2026**
(21) Application number: 24865700.9
(22) Date of filing: 14.08.2024
(51) Int. Cl.: H04R 1/10, H04R 3/00, G06F 3/16, G06F 3/01, G06F 3/00, G02B 27/01

(54) **ELECTRONIC DEVICE AND METHOD FOR CONTROLLING NOISE CANCELING FUNCTION OF WIRELESS AUDIO DEVICE IN ELECTRONIC DEVICE**

(30) Priority: 12.09.2023 KR 20230121366; 14.11.2023 KR 20230157402
(71) Applicant: Samsung Electronics Co., Ltd., Suwon-si, Gyeonggi-do 16677 (KR)
(72) Inventor: MIN, Hyunkee, Suwon-si Gyeonggi-do 16677 (KR); LEE, Mingyu, Suwon-si Gyeonggi-do 16677 (KR); KANG, Doosuk, Suwon-si Gyeonggi-do 16677 (KR); MOON, Choonkyoung, Suwon-si Gyeonggi-do 16677 (KR); CHOI, Bokun, Suwon-si Gyeonggi-do 16677 (KR)
(74) Representative: HGF
(86) International application number: PCT/KR2024/012117
(87) International publication number: WO 2025/058258

(57) **Abstract**

An electronic device is provided. The electronic device comprises: a communication circuit; a memory for storing one or more computer programs; and one or more processors communicatively connected to the communication circuit and the memory. The one or more computer programs, when executed by the one or more processors individually or collectively, may cause the electronic device to: communicate with a wireless audio device outside the electronic device through the communication circuit; identify activation or deactivation of a noise canceling function of the wireless audio device on the basis of a request for transmission of audio data to the wireless audio device; transmit a noise canceling function activation control signal and the audio data to the wireless audio device when the activation of the noise canceling function is identified; and transmit a noise canceling deactivation control signal and the audio data to the wireless audio device when the deactivation of the noise canceling function is identified.

## Description

### [Technical Field]

The disclosure relates to a method of controlling a noise cancelling function of an external wireless audio device by an electronic device.

### [Background Art]

An electronic device may provide a content, and, recently, may provide a virtual reality (VR) content, an augmented reality (AR) content, and a mixed reality (MR) content to a user. As technology has been developed, the lines between VR, AR, and MR contents have been blurred. A concept including VR, AR, and MR is referred to as an extended reality (XR) content. The electronic device may include various types of electronic devices capable of providing an XR function, and an electronic device that is capable of providing an XR content is referred to as an XR electronic device. For example, the XR electronic device may include a smartphone, AR glasses, a VR headset, a head mounted device (HMD), or other XR electronic devices.

The electronic device may output audio data using an external wireless audio device, when providing a content. The wireless audio device may be, for example, earphones, a wireless headset, a wireless ear speaker, or other devices capable of receiving and outputting audio data in a wireless manner. The wireless audio device may provide a noise cancelling function that blocks ambient sounds that a user does not want to listen to or that provides only sounds in a predetermined frequency band, when outputting audio data.

The above information is presented as background information only to assist with an understanding of the disclosure. No determination has been made, and no assertion is made, as to whether any of the above might be applicable as prior art with regard to the disclosure.

### [Disclosure]

### [Technical Problem]

Activation or deactivation of a noise cancelling function of a wireless audio device may be controlled by an electronic device that provides audio data to the wireless audio device. However, activation or deactivation of noise cancelling of the wireless audio device may not be controlled automatically in connection with whether audio data is output.

In the case in which an electronic device needs to output audio data to a wireless audio device, noise cancelling may or may not be required depending on whether the wireless audio device outputs audio data. However, the electronic device controls activation or deactivation of a noise cancelling function of the wireless audio device simply based on a user input, irrespectively of whether the wireless audio device outputs audio data, and this may be inconvenient. It will be convenient if the electronic device is capable of controlling activation or deactivation of a noise cancelling function of the wireless audio device automatically in connection with whether the wireless audio device outputs audio data.

In the case in which an electronic device needs to output audio data via a wireless audio device, noise cancelling of the wireless audio device may or may not be required based on a condition (e.g., an AR mode, a VR mode, a situation, or an ambient environment). However, the electronic device controls activation or deactivation of the noise cancelling function of the wireless audio device only and simply based on a user input, irrespective of a condition. It will be convenient if the electronic device is capable of controlling activation or deactivation of a noise cancelling function of the wireless audio device automatically based on a condition such as an AR mode, a VR mode, a situation, or an ambient environment.

Aspects of the disclosure are to address at least the above-mentioned problems and/or disadvantages and to provide at least the advantages described below.

Accordingly, an aspect of the disclosure is to provide an electronic device that controls activation or deactivation of a noise cancelling function of a wireless audio device according to a condition when the electronic device outputs audio data via the wireless audio device, and a method of controlling a noise cancelling function of a wireless audio device by an electronic device.

Additional aspects will be set forth in part in the description which follows and, in part, will be apparent from the description, or may be learned by practice of the presented embodiments.

### [Technical Solution]

In accordance with an aspect of the disclosure, an electronic device is provided. The electronic device includes communication circuitry, memory storing one or more computer programs, and one or more processors communicatively coupled to the communication circuitry and the memory, wherein the one or more computer programs include computer-executable instructions that, when executed by the one or more processors individually or collectively, cause the electronic device to communicate with a wireless audio device outside the electronic device through the communication circuitry, identify an activation or a deactivation of a noise canceling function of the wireless audio device based on a request for audio data transmission to the wireless audio device, in case that the activation of the noise canceling function is identified, transmit a noise cancelling function activation control signal and the audio data to the wireless audio device, and in case that the deactivation of the noise canceling function is identified, transmit a noise cancelling deactivation control signal and the audio data to the wireless audio device.

In accordance with another aspect of the disclosure, a wireless audio device is provided. The wireless audio device includes communication circuitry, audio circuitry, noise canceling circuitry, memory storing one or more computer programs, and one or more processors communicatively coupled to the communication circuitry, the audio circuity, the noise canceling circuitry, and the memory, wherein the one or more computer programs include computer-executable instructions that, when executed by the one or more processors individually or collectively, cause wireless audio device to perform communication with an electronic device outside the wireless audio device through the communication circuitry, receive audio data from the electronic device, receive a control signal from the electronic device, in case that the control signal is a noise canceling function activation control signal, control the noise canceling circuitry to activate a noise canceling function when the audio data is played, and in case that the control signal is a noise canceling function deactivation control signal, control the noise canceling circuitry to deactivate the noise canceling function.

In accordance with another aspect of the disclosure, an electronic device is provided. The electronic device includes communication circuitry, memory storing one or more computer programs, and one or more processors communicatively coupled to the communication circuitry and the memory, wherein the one or more computer programs include computer-executable instructions that, when executed by the one or more processors individually or collectively, cause the electronic device to activate a virtual reality (VR) function based on a request for performing the VR function, while performing an augmented reality (AR) function, or activate the AR function based on a request for performing the AR function, while performing the VR function, and in case that the VR function is activated, transmit a noise cancelling function activation control signal to a wireless audio device connected to the electronic device by using the communication circuitry, or in case that the AR function is activated, transmit a noise cancelling function deactivation control signal or an ambient sound listening control signal to the wireless audio device connected to the electronic device by using the communication circuitry.

In accordance with another aspect of the disclosure, a method performed by an electronic device of controlling a noise cancelling function of a wireless audio device is provided. The method includes performing, by the electronic device, communication with an external wireless audio device outside the electronic device via a communication circuitry, based on a request for audio data transmission to the wireless audio device, identifying, by the electronic device, activation or deactivation of a noise cancelling function of the wireless audio device, in case that the activation of the noise cancelling function is identified, transmitting, by the electronic device, a noise cancelling function activation control signal and audio data to the wireless audio device, and in case that the deactivation of the noise cancelling function is identified, transmitting, be the electronic device, a noise cancelling deactivation control signal and audio data to the wireless audio device.

In accordance with another aspect of the disclosure, one or more non-transitory computer-readable storage media storing one or more computer programs including computer-executable instructions that, when executed by one or more processors of an electronic device individually or collectively, cause the electronic device to perform operations are provided. The operations include performing, by the electronic device, communication with a wireless audio device outside the electronic device via communication circuitry, based on a request for audio data transmission to the wireless audio device, identifying, by the electronic device, activation or deactivation of a noise cancelling function of the wireless audio device, in case that the activation of the noise cancelling function is identified, transmitting, by the electronic device, a noise cancelling function activation control signal and the audio data to the wireless audio device, and in case that the deactivation of the noise cancelling function is identified, transmitting, by the electronic device, a noise cancelling deactivation control signal and the audio data to the wireless audio device.

Other aspects, advantages, and salient features of the disclosure will become apparent to those skilled in the art from the following detailed description, which, taken in conjunction with the annexed drawings, discloses various embodiments of the disclosure.

### [Advantageous Effects]

In accordance with various embodiments of the disclosure, it may be convenient because the electronic device can automatically control activation or deactivation of the noise canceling function of the wireless audio device according to conditions such as AR mode, VR mode, situation, or surrounding environment.

### [Description of Drawings]

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2 is a diagram illustrating an electronic device and a wireless audio device according to an embodiment of the disclosure;
FIG. 3 is a diagram illustrating a mobile electronic device according to an embodiment of the disclosure;
FIG. 4A is a diagram illustrating an XR electronic device according to an embodiment of the disclosure;
FIG. 4B is a diagram illustrating the structure of a display and an eye-tracking camera of an XR electronic device according to an embodiment of the disclosure;
FIG. 5 is a block diagram of an electronic device according to an embodiment of the disclosure;
FIG. 6 is a flowchart of operations for controlling noise cancelling of a wireless audio device by an electronic device according to an embodiment of the disclosure;
FIG. 7 is a flowchart of operations for controlling noise cancelling of an external wireless audio device in a VR function activation state of an electronic device according to an embodiment of the disclosure;
FIG. 8 is a block diagram of a wireless audio device according to an embodiment of the disclosure;
FIG. 9 is a flowchart illustrating operation of a wireless audio device according to an embodiment of the disclosure;
FIG. 10A is a diagram illustrating an example of transmitting, based on a user input, a noise cancelling activation signal and audio data to a wireless audio device, by a mobile electronic device according to an embodiment of the disclosure;
FIG. 10B is a diagram illustrating an example of transmitting, based on a control signal from another electronic device, a noise cancelling activation signal and audio data to a wireless audio device, by a mobile electronic device according to an embodiment of the disclosure;
FIG. 11A is a diagram illustrating an example of transmitting a noise cancelling activation control signal and audio data to one wireless audio device in a pair of wireless audio devices, by a mobile electronic device according to an embodiment of the disclosure;
FIG. 11B is a diagram illustrating an example of transmitting a noise cancelling activation signal and audio data to one wireless audio device in a pair of wireless audio devices, and transmitting audio data to the other wireless audio device, by a mobile electronic device according to an embodiment of the disclosure;
FIG. 11C is a diagram illustrating an example of transmitting a noise cancelling activation signal and audio data to each in a pair of wireless audio devices, by a mobile electronic device according to an embodiment of the disclosure;
FIG. 12A is a diagram illustrating an example of transmitting a noise cancelling activation control signal and audio data to a wireless audio device when a VR function is activated, by an XR electronic device according to an embodiment of the disclosure;
FIG. 12B is a diagram illustrating an example of transmitting, based on a control signal from another electronic device, a noise cancelling activation control signal and audio data to a wireless audio device, by an XR electronic device according to an embodiment of the disclosure;
FIG. 12C is a diagram illustrating an example of controlling an XR electronic device, and transmitting a noise cancelling activation (or deactivation) control signal and audio data to a wireless audio device, by a mobile electronic device according to an embodiment of the disclosure; and
FIG. 12D is a diagram illustrating an example of transmitting a noise cancelling activation (or deactivation) control signal and audio data to a wireless audio device via a mobile electronic device, by an XR electronic device according to an embodiment of the disclosure.

Throughout the drawings, like reference numerals will be understood to refer to like parts, components, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an integrated circuit (IC), or the like.

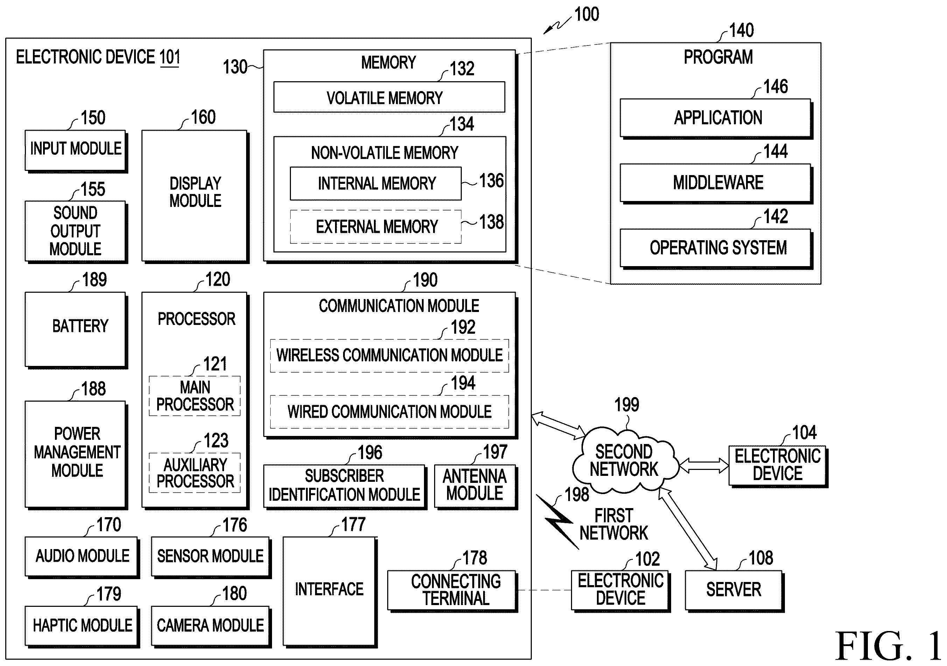

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, configurations that can be understood through the preceding embodiments may be provided with the same reference numerals in the drawings or provided with no reference numerals, and detailed descriptions thereof may also be omitted. The electronic device 101 according to an embodiment set forth herein may be implemented by selectively combining the configurations of the respective embodiments, and may be replaced with the configurations of one embodiment, For example, it is noted that the disclosure is not limited to a specific drawing or embodiment.

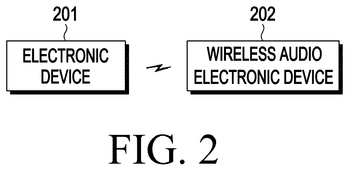

FIG. 2 is a diagram illustrating an electronic device and a wireless audio device according to an embodiment of the disclosure.

Referring to FIG. 2, an electronic device 201 (e.g., the electronic device 101 of FIG. 1) according to an embodiment may perform communication (e.g., short-range wireless communication) with an external wireless audio device 202 (e.g., the electronic device 102 of FIG. 1). The electronic device 201 according to an embodiment may transmit audio data to the wireless audio device 202 via communication. Based on a request for audio data transmission via communication (or occurrence of an audio data transmission event) (or occurrence of a request for activation or deactivation of a noise cancelling function during audio data transmission), the electronic device 201 according to an embodiment may identify activation or deactivation of a noise cancelling function of the wireless audio device 202. In the case in which activation of the noise cancelling function of the wireless audio device 202 is identified based on a request for audio data transmission to the wireless audio device 202, the electronic device 201 according to an embodiment may transmit audio data and a noise cancelling function activation control signal to the wireless audio device 202, or may transmit a noise cancelling function activation control signal to the wireless audio device 202 while broadcasting audio data (e.g., by using a broadcast isochronous stream). In the case in which deactivation of the noise cancelling function of the wireless audio device 202 is identified based on a request for audio data transmission to the wireless audio device 202, the electronic device 201 according to an embodiment may transmit audio data and a noise cancelling function deactivation control signal to the wireless audio device 202, or may transmit a noise cancelling function deactivation control signal to the wireless audio device 202, while broadcasting audio data. In the case in which an ambient sound listening function of the wireless audio device 202 is identified based on a request for audio data transmission to the wireless audio device 202, the electronic device 201 according to an embodiment may transmit audio data and an ambient sound listening function control signal to the wireless audio device 202, or may transmit a noise cancelling function deactivation control signal to the wireless audio device 202, while broadcasting audio data.

In the case in which noise cancelling function activation, noise cancelling function deactivation, or an ambient sound listening function of the wireless audio device 202 is not identified based on a request for audio data transmission to the wireless audio device 202, the electronic device 201 according to an embodiment may transmit or broadcast audio data to the wireless audio device 202 without a noise cancelling function activation control signal, a noise cancelling function deactivation control signal, or an ambient sound listening function control signal. A noise cancelling function according to an embodiment may be a function that enables a user not to listen to an ambient sound other than an audio data sound via the wireless audio device 202. A noise cancelling deactivation function according to an embodiment may be a function that turns off noise cancelling activation of the wireless audio device 202. An ambient sound listening function according to an embodiment may be a function that enables a user to listen to an ambient sound other than an audio data sound via the wireless audio device 202. The ambient sound listening function according to an embodiment may be a function that enables a user who wears a wireless audio device to listen to ambient sounds in the state in which noise cancelling is deactivated. For example, the ambient sound listening function may be a function in which the wireless audio device 202 enables a user to listen to an ambient sound other than an audio data sound at a specified ambient sound listening level (e.g., a low, medium, or high level). For example, in the case in which an ambient sound listening level is specified to be (or set to) a low level, the electronic device 201 may transmit a low-level ambient sound listening function control signal to the wireless audio device 202, and the wireless audio device 202 may operate based on the low-level ambient sound listening control signal so that an ambient sound is provided at the specified low level. For example, in the case in which an ambient sound listening level is specified to be (or set to) a medium level, the electronic device 201 may transmit a medium-level ambient sound listening function control signal to the wireless audio device 202, and the wireless audio device 202 may operate based on the medium-level ambient sound listening control signal so that an ambient sound is provided at the specified medium level. For example, in the case in which an ambient sound listening level is specified to be (or set to) a high level, the electronic device 201 may transmit a high-level ambient sound listening function control signal to the wireless audio device 202, and the wireless audio device 202 may operate based on the high-level ambient sound listening control signal so that an ambient sound is provided at the specified high level. The ambient sound listening level according to an embodiment may be adjusted in various levels according to a user setting, in addition to the low, medium, and high levels.

The electronic device 201 according to an embodiment may include an XR electronic device capable of providing an extended reality (XR) function or an XR content, or an electronic device that interoperates with an XR electronic device when providing an XR function or an XR content via the XR electronic device. An XR function according to an embodiment may include a virtual reality (VR) function, an augmented reality (AR) function, and/or a mixed reality (MR) function, and an XR content may include a VR content, an AR content, and/or an MR content. An XR electronic device or an electronic device that interoperates with an XR electronic device may broadcast audio data (e.g., audio data corresponding to an XR function or an XR content and/or audio data (e.g., music) of which output is requested separately from provision of an XR function or an XR content) or may transmit audio data to the wireless audio device 202 when providing an XR function or an XR content, so as to enable the wireless audio device 202 to output the same. For example, an XR electronic device may include AR glasses, a VR headset, a head mounted device (HMD), or other XR electronic devices. For example, the electronic device that interoperates with an XR electronic device may include a mobile electronic device (e.g., a smartphone or tablet), a PC, or other electronic devices.

The wireless audio device 202 according to an embodiment may perform communication with the electronic device 201. The wireless audio device 202 according to an embodiment may receive a noise cancelling function activation control signal, a noise cancelling function deactivation control signal, or an ambient sound listening control signal in association with audio data received from the electronic device 201. According to an embodiment, when audio data transmission is requested, the electronic device 201 may broadcast audio data or transmit audio data to the wireless audio device 202, and may transmit, to the wireless audio device 202, a noise cancelling function activation control signal, a noise cancelling deactivation control signal, or an ambient sound listening control signal to be applied when audio data is output. The wireless audio device 202 according to an embodiment may activate a noise cancelling function based on a noise cancelling function activation control signal, and may output audio data. The wireless audio device 202 according to an embodiment may deactivate a noise cancelling function based on a noise cancelling function deactivation control signal, and may output audio data. The wireless audio device 202 according to an embodiment may output audio data while providing an ambient sound based on an ambient sound listening function control signal. The wireless audio device 202 according to an embodiment may further include a wireless headset, a wireless earphone, and other wireless audio devices including an audio data outputting function and a noise cancelling function.

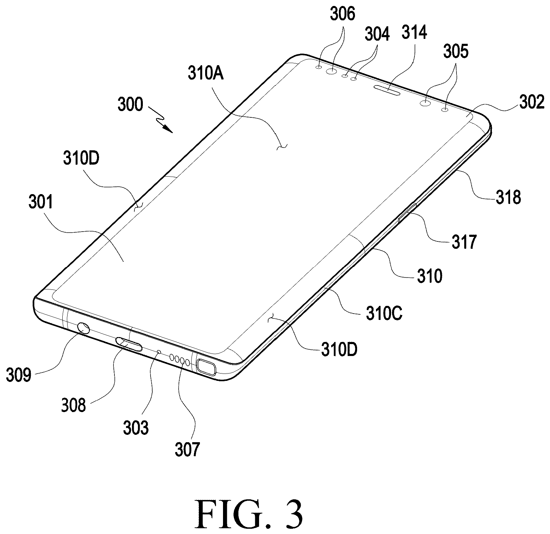

FIG. 3 is a diagram illustrating a mobile electronic device according to an embodiment of the disclosure.

Referring to FIG. 3, a mobile electronic device 300 (e.g., the electronic device 101 of FIG. 1 or the electronic device 201 of FIG. 2) according to an embodiment may transmit audio data to the wireless audio device 202 for output. The mobile electronic device 300 according to an embodiment may interoperate with an external XR electronic device, and may transmit audio data corresponding to an XR function or an XR content to the wireless audio device 202 when providing the XR function or XR content via the XR electronic device, so as to output the same via the wireless audio device 202.

The mobile electronic device 300 according to an embodiment may include a housing 310 including a first side (or front side) 310A, a second side (or rear side) 310B, and a lateral side 310C encloses the space between the first side 310A and the second side 310B. According to another embodiment (not illustrated), a housing may refer to a structure that is a part of the first side 310A, the second side 310B, and the lateral side 310C of FIG. 3. According to an embodiment, the first side 310A may be configured with a front plate 302 at least a part of which is substantially transparent (e.g., a glass plate including various coating layers or a polymer plate). The second side 310B may be configured with a rear plate (not illustrated) that is substantially opaque. The rear plate may be configured with, for example, a coating or pigmented glass, ceramic, a polymer, metal (e.g., aluminum, stainless steel (STS), magnesium), or a combination of at least two thereof. The lateral side 310C may be coupled with the front plate 302 and the rear plate, and may be configured by a lateral bezel structure 318 (or "lateral member") including metal and/or a polymer. In some embodiments, the rear plate and the lateral bezel structure 318 may be configured as a single entity and may include the same material (e.g., metal such as aluminum).

The front plate 302 according to an embodiment may include, in both long edge ends of the front plate 302, two first areas 310D, which are seamlessly extended from the first side 310A and are bent toward the rear plate. In some embodiments, the front plate 302 (or the rear plate) may include only one of the first areas 310D. In other embodiments, some of the first areas 310D may not be included. In the embodiments, when viewed from the lateral side of the mobile electronic device 300, the lateral bezel structure 318 may have a first thickness (or width) in a lateral side that excludes the first areas 310D, and may have a second thickness, which is thinner than the first thickness, in a lateral side that includes the first areas 310D.

According to an embodiment, the mobile electronic device 300 may include at least one among a display 301, audio modules 303, 307, and 314, sensor modules 304, a camera module 305, a key input device 317, a light emitting device 306, and connector holes 308 and 309. In some embodiments, the mobile electronic device 300 may omit at least one (e.g., the key input device 317 or the light emitting device 306) of the component elements, or may additionally include another component element.

The display 301, for example, may be exposed via a large portion of the front plate 302. In some embodiments, at least a part of the display 301 may be exposed via the front plate 302 configuring the first side 310A and the first areas 310D of the lateral side 310C. In some embodiments, the edges of the display 301 may be configured to be almost the same as the shape of an adjacent outer part of the front plate 302. In another embodiment (not illustrated), in order to extend an area where the display 301 is exposed, an interval between the outer part of the display 301 and the outer part of the front plate 302 may be configured to be almost the same.

In another embodiment (not illustrated), a recess or an opening is formed in a part of a screen display area of the display 301, and may include at least one of an audio module 314, a sensor module 304, a camera module 305, and a light emitting device 306 that are aligned with the recess or the opening. In another embodiment (not illustrated), at least one of the audio module 314, the sensor module 304, the camera module 305, a fingerprint sensor (not illustrated), and the light emitting device 306 may be included in the rear side of the screen display area of the display 301. In another embodiment (not illustrated), the display 301 may be coupled with a touch sensing circuitry, a pressure sensor capable of measuring the strength (pressure) of a touch, and/or a digitizer that detects a magnetic stylus pen, or may be disposed to be close thereto. In some embodiments, at least a part of the sensor module 304 and/or at least a part of the key input device 317 may be disposed in the first areas 310D.

The audio modules 303, 307, and 314 may include the microphone hole 303 and the speaker holes 307 and 314. In the case of the microphone 303, a microphone for obtaining a sound from the outside may be disposed in an internal side. In some embodiments, a plurality of microphones may be disposed so as to detect the direction of a sound. The speaker holes 307 and 314 may include the external speaker hole 307 and the receiver hole 314 for call. In some embodiments, the speaker holes 307 and 314 and the microphone hole 303 may be embodied as a single hole, or a speaker (e.g., a piezo speaker) may be included without the speaker holes 307 and 314.

The sensor module 304 may produce an electric signal or a data value corresponding to an internal operation state of the mobile electronic device 300 or an electric signal or a data value corresponding to an external environment state. The sensor module 304 may include, for example, a first sensor module 304 (e.g., a proximity sensor) and/or a second sensor module (not illustrated) (e.g., a fingerprint sensor) disposed in the first side 310A of the housing 310, and/or a third sensor module (not illustrated) (e.g., a HRM sensor) and/or a fourth sensor module (not illustrated) (e.g., a fingerprint sensor) disposed in the second side 310B of the housing 310. The fingerprint sensor may be disposed in the second side 310B in addition to the first side 310A (e.g., the display 301) of the housing 310. The mobile electronic device 300 may further include at least one sensor module which is not illustrated, for example, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, or the illumination sensor 304.

The camera module 305 may include the first camera device 305 disposed in the first side 310A of the mobile electronic device 300, a second camera device (not illustrated) disposed in the second side 310B, and/or a flash (not illustrated). The camera devices 305 may include one or multiple lens, an image sensor, and/or an image signal processor. A flash (not illustrated) may include, for example, a light emitting diode or a xenon lamp. In some embodiments, two or more lens (an infrared light camera, a wide-angle and telephoto lens) and image sensors may be disposed in one side of the mobile electronic device 300.

The key input device 317 may be disposed in the lateral side 310C of the housing 310. In another embodiment, the mobile electronic device 300 may not include the whole or a part of the above-mentioned key input device 317, and the excluded key input device 317 may be embodied in another form, such as a soft key, in the display 301. In some embodiments, the key input device may include a sensor module (not illustrated) disposed in the second side 310B of the housing 310.

The light emitting device 306 may be disposed in, for example, the first side 310A of the housing 310. The light emitting device 306 may provide, for example, state information of the mobile electronic device 300 in an optical form. In another embodiment, the light emitting device 306 may provide, for example, a light source that interoperates with operation of the camera module 305. The light emitting device 306 may include, for example, an LED, an IR LED, and a xenon lamp.

The connector holes 308 and 309 may include the first connector hole 308 capable of accommodating a connector (e.g., a USB connector) for performing power and/or data transmission or reception with an external electronic device, and/or the second connector hole 309 (e.g., an earphone jack) capable of accommodating a connector for audio signal transmission or reception with an external electronic device. In the case in which the electronic device 300 according to an embodiment is a foldable electronic device, the foldable electronic device (not illustrated) may include a pair of housing structures (e.g., a foldable housing structure) that are coupled to be rotatable on a folding axis via a hinge structure (not illustrated) that enables the housing structures to bend toward each other, and a display (not illustrated) (e.g., a flexible display, and a foldable display) disposed in a space formed by the pair of housing structures (not illustrated). According to an embodiment, a display may be folded or unfolded along with the folding or unfolding of the foldable electronic device (not illustrated).

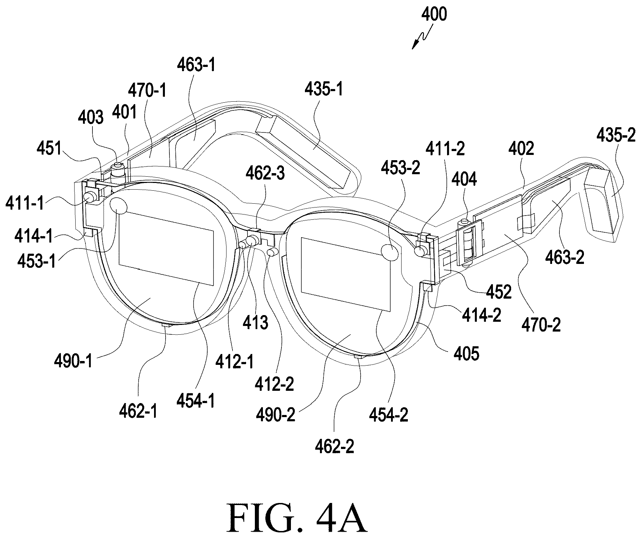

FIG. 4A is a diagram illustrating an XR electronic device according to an embodiment of the disclosure.

Referring to FIG. 4A, an XR electronic device 400 (e.g., the electronic device 101 of FIG. 1 or the electronic device 201 of FIG. 2) according to an embodiment may perform an XR function or may provide an XR content, and, when performing an XR function or providing an XR content, may transmit audio data corresponding to the XR function or the XR content to the wireless audio device 202 so as to output the same.

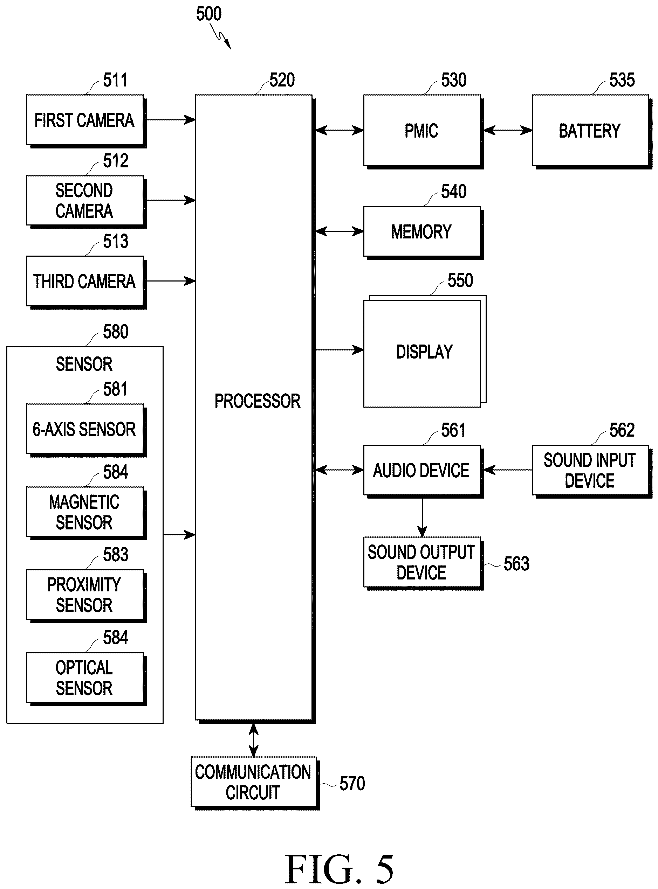

The XR electronic device 400 according to an embodiment may include a wearable electronic device (e.g., a glasses-type electronic device). The XR electronic device 400 according to an embodiment may include a frame 405, a first supporter 401, a second supporter 402, a first hinge part 403 that connects the frame 405 and the first supporter 401, and/or a second hinge part 404 that connects the frame 405 and the second supporter 402. According to an embodiment, the frame 405 may include at least one camera (e.g., first cameras 411-1and 411-2, second cameras 412-1 and 412-2, and/or a third camera 413), one or more light emitting devices 414-1 and 414-2, at least one display (e.g., a first display 451 or a second display 452), one or more sound input devices 462-1, 462-2, and 462-3), or one or more transparent members 490-1 and 490-2. The XR electronic device 400 according to an embodiment may include one or more first cameras 411-1 and 411-2, one or more second cameras 412-1 and 412-2, and/or one or more third cameras 413. An image obtained via the one or more first cameras 411-1 and 411-2 according to an embodiment may be used for detecting a hand gesture made by a user, tracking the head of a user, and/or awareness of space. One or more first cameras 411-1 and 411-2 according to an embodiment may be a global shutter (GS) camera. The one or more first cameras 411-1 and 411-2 according to an embodiment may perform a simultaneous localization and mapping (SLAM) operation via depth shooting. The one or more first cameras 411-1 and 411-2 according to an embodiment may perform awareness of space for 6 degrees of freedom (DoF). An image obtained via the one or more second cameras 412-1 and 412-2 according to an embodiment may be used for detecting and tracking the eyes of a user. For example, an image obtained via the one or more second cameras 412-1 and 412-2 may be used for tracking the direction of the eyes of a user. The one or more second cameras 412-1 and 412-2 according to an embodiment may be GS cameras. The one or more second cameras 412-1 and 412-2 according to an embodiment may correspond to the left eye and the right eye, respectively, and the performance of the one or more second cameras 412-1 and 412-2 may be substantially the same. The one or more third cameras 413 according to an embodiment may be high-resolution cameras. The one or more third cameras 413 according to an embodiment may perform an auto-focusing (AF) function and an optical image stabilization function. The one or more third cameras 413 according to an embodiment may be GS cameras or rolling shutter (RS) cameras. The XR electronic device 400 according to an embodiment may include one or more light emitting devices 414-1 and 414-2. The light emitting devices 414-1 and 414-2 may be different from a light source that emits light to a screen output area of a display, which will be described later. The light emitting devices 414-1 and 414-2 according to an embodiment may emit light to easily detect the pupils of a user when detecting and tracking the pupils of the user via the one or more second cameras 412-1 and 412-2. The light emitting devices 414-1 and 414-2 according to an embodiment may include LEDs. The light emitting devices 414-1 and 414-2 according to an embodiment may emit light in the range of an infrared zone. The light emitting devices 414-1 and 414-2 according to an embodiment may be attached around the frame 405 of the XR electronic device 400. In the case in which the light emitting devices 414-1 and 414-2 are located around the one or more first cameras 411-1 and 411-2, and, when the XR electronic device 400 is used in a dark environment, the light emitting devices 414-1 and 414-2 may assist gesture detection, head tracking, and/or space awareness performed by the one or more first cameras 411-1 and 411-2. In the case in which the light emitting devices 414-1 and 414-2 according to an embodiment are located around the one or more third cameras 413, and, when the XR electronic device 400 is used in a dark environment, the light emitting devices 414-1 and 414-2 may assist the one or more third camera 413 to obtain an image. The XR electronic device 400 according to an embodiment may include a first display 451 located in the frame 405, a second display 452, one or more input optical members 453-1 and 453-2, one or more transparent members 490-1 and 490-2, and/or one or more screen display parts 454-1 and 454-2. The first display 451 and the second display 452 according to an embodiment may include, for example, a liquid crystal display (LCD), a digital mirror device (DMD), a liquid crystal on silicon (LCoS), an organic light emitting diode (OLED), or a micro light emitting diode (micro LED). In the case in which the first display 451 and the second display 452 are embodied as one of an LCD, a DMD, or an LCoS, the XR electronic device 400 may include a light source that emits light to a screen output area of the display. In the case in which the first display 451 and/or the second display 452 according to an embodiment is capable of autonomously providing light, for example, in the case in which the first display 451 and the second display 452 are embodied as one of an OLED or a micro LED, the XR electronic device 400 may provide a virtual image of a good quality to a user although the XR electronic device 400 does not include a separate light source. The one or more transparent members 490-1 and 490-2 according to an embodiment may be disposed to face the eyes of a user when the user wears the XR electronic device 400. The one or more transparent members 490-1 and 490-2 according to an embodiment may include at least one of a glass plate, a plastic plate, or a polymer. In the case in which a user according to an embodiment wears the XR electronic device 400, the user is capable of viewing the outside world via the one or more transparent members 490-1 and 490-2. The one or more input optical members 453-1 and 453-2 according to an embodiment may guide a light produced from the first display 451 and the second display 452 to the eyes of a user. An image based on a light produced by the first display 451 and the second display 452 is formed on the one or more screen display parts 454-1 and 454-2 on the one or more transparent members 490-1 and 490-2 according to an embodiment, and a user may view the image formed on the one or more screen display parts 454-1 and 454-2. The XR electronic device 400 according to an embodiment may include one or more optical waveguides (not illustrated). The optical waveguides may transfer a light produced by the first display 451 and the second display 452 to the eyes of a user. The XR electronic device 400 may include an optical waveguide for each of the left eye and the right eye. An optical waveguide according to an embodiment may include at least one of glass, plastic, or a polymer. The optical waveguide according to an embodiment may include a nano pattern formed in one inner or outer surface, for example, a polygonal or curved surface shaped grating structure. The optical waveguide according to an embodiment may include a free-form type prism, and, in this instance, the optical waveguide may provide an incident light to a user via a reflection mirror. The optical waveguide according to an embodiment may include at least one among at least one diffractive element (e.g., a diffractive optical element (DOE), a holographic optical element (HOE)) or a reflective element (e.g., a reflective mirror), and may guide a display light emitted from a light source to the eyes of a user by using the at least one diffractive element or the reflective element included in the optical waveguide. The diffractive element according to an embodiment may include an input/output optical member. The reflective element according to an embodiment may include a member that causes total reflection. The XR electronic device 400 according to an embodiment may include one or more sound input devices 462-1, 462-2, and 462-3 (e.g., a microphone), and may receive a sound from a user or an ambient sound produced around the XR electronic device 400 by using the one or more sound input devices 462-1, 462-2, and 462-3. For example, the one or more sound input devices 462-1, 462-2, and 462-3 may receive an ambient sound and may transfer the same to a processor (e.g., a processor 520 of FIG. 5). The one or more supporters (e.g., the first supporter 401 and the second supporter 402) according to an embodiment may include a PCB (e.g., a first PCB 470-1 and a second PCB 470-2), one or more sound output devices 463-1 and 463-2, and/or one or more batteries 435-1 and 435-2. The first PCB 470-1 and the second PCB 470-2 may transfer an electric signal to component elements included in the XR electronic device 400, such as a first camera 511, a second camera 512, and a third camera 513, a display module 550, an audio device 561, and/or a sensor 580 which will be described with reference to FIG. 5. The first PCB 470-1 and the second PCB 470-2 according to an embodiment may be FPCBs. The first PCB 470-1 and the second PCB 470-2 according to an embodiment may include a first substrate, a second substrate, and an interposer disposed between the first substrate and the second substrate. The XR electronic device 400 according to an embodiment may include a battery 435-1 and 435-2. The batteries 435-1 and 435-2 may store power for operating the remaining component elements of the XR electronic device 400. The one or more sound output devices 463-1 and 463-2 (e.g., a speaker) according to an embodiment may output audio data to a user. For example, feedback to a user command (or input) may be provided, or information associated with a virtual object may be provided to a user via audio data. The XR electronic device 400 according to an embodiment may include one or more hinge parts (e.g., the first hinge part 403 and the second hinge part 404). For example, the first hinge part 403 may enable the first supporter 401 to be coupled with the frame 405 and to be rotatable on the frame 405, and the second hinge part 404 may enable the second supporter 402 to be coupled with the frame 405 and to be rotatable on the frame 405.

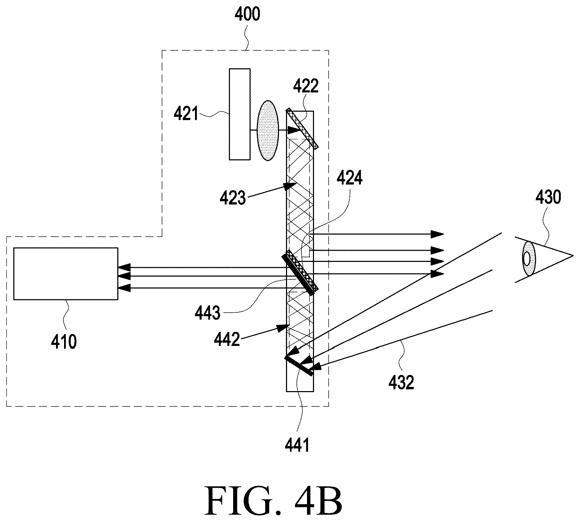

FIG. 4B is a diagram illustrating the structure of a display and an eye-tracking camera of an XR electronic device according to an embodiment of the disclosure.

Referring to FIG. 4B, the XR electronic device 400 (e.g., the electronic device 101 of FIG. 1 or the electronic device 201 of FIG. 2) according to an embodiment may include a display 421, an input optical member 422, a display optical waveguide 423, an output optical member 424, an eye-tracking camera 410, a first splitter 441, an eye-tracking optical waveguide 442, and/or a second splitter 443.

In the XR electronic device 400 according to an embodiment, the display 421 may be the first display 451 or the second display 452 of FIG. 4A. A light output from the display 421 may pass the input optical member 422 (e.g., the input optical members 453-1 and 453-2 of FIG. 4A), may be incident to the display optical waveguide 423, may pass through the display optical waveguide 423, and may be output via the output optical member 424. The light output from the output optical member 424 may be visible to the eyes 430 of a user. According to an embodiment, a light output from the display 421 is output via the output optical member 424 so that the shape of an object is viewed by the eyes 430 of the user via the light output via the output optical member 424, which is a process of displaying an object on a display. When a light output from the display 421 according to an embodiment is output via the output optical member 424, controlling the display 421 so that the shape of an object is viewed by the eyes 430 of the user via the light output via the output optical member 424 may be controlling for displaying an object. A light 432 reflected from the eyes 430 of the user may pass the first splitter 441, may be incident to the eye-tracking optical waveguide 442, may pass through the eye-tracking optical waveguide 442, and may output to the eye-tracking camera 410 by the second splitter 443. According to various embodiments, the light 432 reflected from the eyes 430 of the user may be a light that is output from the light emitting device 414-1 and 414-2 of FIG. 4A, and is reflected by the eyes 430 of the user. According to various embodiments, the eye-tracking camera 410 may be one or more second cameras 412-1 and 412-2 of FIG. 4A.

FIG. 5 is a block diagram of an electronic device according to an embodiment of the disclosure.

Referring to FIG. 5, an electronic device 500 (e.g., the electronic device 101 of FIG. 1, the electronic device 201 of FIG. 2, the mobile electronic device 300 of FIG. 3, or the XR electronic device 400 of FIG. 4B) according to an embodiment may include a communication circuitry 570, memory 540, and a processor 520. The electronic device 500 according to an embodiment may further include a first camera 511, a second camera 512, a third camera 513, a power management integrated chip (PMIC) 530, a battery 535, the display 550, the audio device 561, a sound input device 562, a sound output device 563, and/or the sensor 580. The electronic device 500 according to an embodiment is not limited thereto, and may be configured by further including various component elements or excluding some of the component elements. The electronic device 500 according to an embodiment may further include the whole or a part of the electronic device 101 illustrated in FIG. 1.

The processor 520 (e.g., the processor 120 of FIG. 1) according to an embodiment may control at least one other component element (e.g., a hardware or software component element) of the electronic device 500 and may perform various data processing or operations. The processor 520 according to an embodiment may control other component elements of the electronic device 500, for example, a first camera 511, a second camera 512, a third camera 513, a PMIC 530, the memory 540, a display 550, an audio device 561, the communication circuitry 570, and/or a sensor 580, and may perform various data processing or operations.

The processor 520 according to an embodiment may communicate with an external wireless audio device (e.g., the electronic device 102 of FIG. 1 or the wireless audio device 202 of FIG. 2) via the communication circuitry 570 (e.g., the communication module 190 of FIG. 1). Based on a request for audio data transmission to the wireless audio device, the processor 520 according to an embodiment may identify whether to control noise canceling function activation, noise cancelling function deactivation, or an ambient sound listening function of the wireless audio device. Based on identification of control of the noise cancelling function activation, the processor 520 according to an embodiment may transmit a noise cancelling function activation control signal and audio data to the wireless audio device, or may transmit a noise cancelling function activation control signal to the wireless audio device, while broadcasting audio data (e.g., broadcast isochronous stream (BIS)). Based on identification of control of noise cancelling function deactivation, the processor 520 according to an embodiment may transmit a noise cancelling function deactivation control signal and audio data to the wireless audio device, or may transmit a noise cancelling function deactivation control signal to the wireless audio device 202, while broadcasting audio data. In the case in which control of the ambient sound listening function of the wireless audio device is identified based on the request for audio data transmission to the wireless audio device, the processor 520 according to an embodiment may transmit audio data and an ambient sound listening function control signal to the wireless audio device, or may transmit a noise cancelling function deactivation control signal to the wireless audio device, while broadcasting audio data.

A noise cancelling function according to an embodiment may be a function that enables a user not to listen to an ambient sound other than an audio data sound via the wireless audio device. A noise cancelling deactivation function according to an embodiment may be a function that turns off noise cancelling activation of the wireless audio device. An ambient sound listening function according to an embodiment may be a function that enables a user to listen to an ambient sound other than an audio data sound via the wireless audio device. For example, the ambient sound listening function may be a function in which the wireless audio device enables a user to listen to an ambient sound other than an audio data sound at a specified ambient sound listening level (e.g., a low, medium, or high level). For example, in the case in which an ambient sound listening level is specified to be (or set to) a low level, the processor 520 may perform control so as to transmit a low-level ambient sound listening function control signal to the wireless audio device, and the wireless audio device may operate based on the low-level ambient sound listening control signal so that an ambient sound is provided at the specified low level. For example, in the case in which an ambient sound listening level is specified to be (or set to) a medium level, the processor 520 may perform control so as to transmit a medium-level ambient sound listening function control signal to the wireless audio device, and the wireless audio device may operate based on the medium-level ambient sound listening control signal so that an ambient sound is provided at the specified medium level. For example, in the case in which an ambient sound listening level is specified to be (or set to) a high level, the processor 520 may perform control so as to transmit a high-level ambient sound listening control signal to the wireless audio device, and the wireless audio device may operate based on the high-level ambient sound listening control signal so that an ambient sound is provided at the specified high level. The ambient sound listening level according to an embodiment may be adjusted in various levels according to a user setting, in addition to the low, medium, and high levels. In the case in which an ambient sound listening level is specified to be (or is set to) high, the processor 520 according to an embodiment may amplify an ambient sound received via the sound input device 562 and may output the same via the sound output device 563.

The processor 520 according to an embodiment may identify AR function activation (or an AR mode) or VR function activation (or a VR mode) based on a request for audio data transmission to the wireless audio device, and may identify noise cancelling function deactivation control or an ambient sound listening function based on the AR function activation, and may identify noise cancelling function activation control based on the VR function activation. In an AR function activation state, the processor 520 according to an embodiment may perform an AR function, may output an AR content, and may transmit audio data included in the AR content to an external wireless audio device for output. The AR content according to an embodiment may be a content that is displayed on a lens in front of a user's eyes, and is obtained by overlapping a virtual image and an image of an external environment viewed by the user's eyes or an image of an environment outside the electronic device 500 shot by at least one camera (e.g., the first camera 511, the second camera 512, and/or the third camera 513). The electronic device 500 according to an embodiment may provide an AR content in an optical see through (OST) scheme that enables an external environment to be seen by eyes through a lens in front of the eyes, simultaneously with a virtual image projected onto the lens. Alternatively, the electronic device 500 according to an embodiment may provide an AR content in a video see through (VST) scheme that displays a content by overlapping a virtual image and an image of an environment outside the electronic device 500 that is shot by at least one camera (e.g., the first camera 511, the second camera 512, and/or the third camera 513). An AR content according to an embodiment may include a virtual image that is displayed in a manner of overlapping an external environment (or an image of an external environment), and may further include audio data associated with the AR content. The processor 520 according to an embodiment may transmit the audio data included in the AR content to the external wireless audio device for output. When transmitting the audio data included in the AR content to the external wireless audio device for output, the processor 520 according to an embodiment may transmit a noise cancelling function deactivation control signal or an ambient sound listening function control signal based on AR function activation, and audio data to the wireless audio device.

In a VR function activation state, the processor 520 according to an embodiment may perform a VR function, may output a VR content, and may transmit audio data included in the VR content to the external wireless audio device for output. The VR content according to an embodiment may be a virtual image of a virtual environment displayed in the state in which a real-world environment outside is blocked. A VR content according to an embodiment may include a virtual image of a virtual environment, and may further include audio data associated with the VR content. The processor 520 according to an embodiment may transmit audio data included in the VR content to the external wireless audio device for output. When transmitting audio data corresponding to the VR content to the external wireless audio device for output, the processor 520 according to an embodiment may transmit a noise cancelling function activation control signal based on VR function activation, and audio data to the wireless audio device. According to an embodiment, although the electronic device 500 may be capable of recognizing an external environment of a user, while performing an AR function, the electronic device 500 may have difficulty in recognizing an external environment of the user, while performing a VR function. The electronic device 500 according to an embodiment may obtain information associated with an external environment (e.g., an external environment image, an external sound, external sensing information, and/or operation information of an external other electronic device) independently from a VR function, while performing the VR function, and may perform control so that a user is capable of recognizing the external environment based on the obtained information associated with the external environment.

While performing the VR function, the processor 520 according to an embodiment may obtain a shot image and/or sensing information in association with an environment outside the electronic device 500 by using at least one of first to third cameras 511 to 513 and/or a sensor 580, and may obtain first information associated with an external object (or ambient object) (e.g., a human, an animal, or an obstacle) of the electronic device 500 (e.g., an object shape, an external object location, proximity of an external object, a size of an external object, and/or other information associated with an external object). While performing the VR function, the processor 520 according to an embodiment may obtain a sound outside the electronic device 500 by using the sound input device 562 (e.g., a microphone) and may obtain second information associated with the sound outside the electronic device 500 (e.g., a sound type, a sound size, and/or other information associated with a sound outside). While performing the VR function, the processor 520 according to an embodiment may obtain operation information of another electronic device from an external other electronic device (not illustrated) connected using the communication circuitry 570, and may obtain third information associated with an operation of the external other electronic device (e.g., operation information of an induction heater, a unlocking a digital door lock, or other operation information) by using the obtained operation information of the other electronic device. While performing the VR function, the processor 520 according to an embodiment may obtain external environment sensing information (e.g., temperature, light intensity, and/or GPS information) of the electronic device 500 by using the sensor 580, and may obtain fourth information associated with an external environment (e.g., an external temperature, an external light intensity, and/or location information) by using the external environment sensing information.

Based on the first information associated with an external object, the second information associated with an external sound, the third information associated with an operation of an external other electronic device, and/or the fourth information associated with an external environment, the processor 520 according to an embodiment may identify whether an ambient environment of the electronic device 500 satisfies a specified first condition. The specified first condition according to an embodiment may be a low-risk state condition for reporting, to a user, an external object, an external sound, an operation of an external other electronic device, and/or an external environment. Based on the first information associated with an external object, the second information associated with an external sound, the third information associated with an operation of an external other electronic device, and/or the fourth information associated with an external environment, the processor 520 according to an embodiment may identify whether an ambient environment of the electronic device 500 satisfies a specified second condition. The specified second condition according to an embodiment may be a high-risk state condition for warning a user about an external object, an external sound, an operation of an external other electronic device, and/or an external environment.

According to an embodiment, in the case in which an external object is close enough to fall within a specified first distance to a user, this is a low-risk state condition for reporting the state to the user. In the case in which an external object is close enough to fall within a second distance to a user, which is closer than the specified first distance, this is a high-risk state condition for warning the user. According to an embodiment, in the case in which an external sound is a first type of sound and/or a first intensity of sound that needs to be recognized by a user, this may be a low-risk state condition for reporting the state to the user. In the case in which an external sound is a second type of sound and/or a second intensity of sound about which a user needs to be warned, this may be a high-risk state condition for warning the user. According to an embodiment, in the case in which an operation of an external other electronic device is a first operation that needs to be recognized by a user, this may be a low-risk state condition for reporting the state to the user. In the case in which an operation of an external other electronic device is a second operation about which a user needs to be warned, this may be a high-risk state condition for warning the user. According to an embodiment, in the case in which an external environment is a first environment (e.g., a first temperature or higher, a first optical intensity or higher, or a first location) that needs to be recognized by a user, this may be a low-risk state condition for reporting the state to the user. In the case in which an external environment is a second environment (e.g., a second temperature or higher, a second optical intensity or higher, or a second location) about which a user needs to be warned, this may be a high-risk state condition for warning the user.

In the case in which an ambient environment of the electronic device 500 satisfies the specified first condition, the processor 520 according to an embodiment may display visual information corresponding to the specified first condition via the display 550, or may transmit, to the wireless audio device, a control signal for decreasing a level of a noise cancelling function. In the case in which an ambient environment of the electronic device 500 satisfies the specified second condition, the processor 520 according to an embodiment may stop, based on the second condition, performing of the VR function, and may transmit a noise cancelling function deactivation control signal or an ambient sound listening function control signal to the wireless audio device. In the case in which an ambient environment of the electronic device 500 satisfies the specified second condition, the processor 520 according to an embodiment may stop performing of the VR function, and may activate the AR function.

The PMIC 530 according to an embodiment may convert power stored in the battery 535 to have a current or voltage that other component elements of the electronic device 500 requires, and may supply the same to the other component elements of the electronic device 500.

The memory 540 may store various pieces of data used by at least one component element (e.g., the processor 520, the sensor 580, or other component elements) of the electronic device 500. The memory 540 according to an embodiment may store instructions (or commands or programs) that cause the processor 520 to operate when the instructions are executed.

The display 550 according to an embodiment may display a screen to be provided to a user. The display 550 according to an embodiment may include the display 301 that is exposed via a large portion of the front plate 302 as illustrated in FIG. 3, or may include the first display 451, the second display 452, the one or more input optical members 453-1 and 453-2, the one or more transparent members 490-1 and 490-2, and/or the one or more screen display parts 454-1 and 454-2 as illustrated in FIG. 4A.

The audio device 561 according to an embodiment may be connected to the sound input device 562 (e.g., a microphone) and the sound output device 563, may convert data input via the sound input device 562, and may convert data to be output to the sound output device 563. The audio device 561 according to an embodiment may be the audio modules 303, 307, and 314 of FIG. 3. The sound output device 563 may include a speaker and an amplifier. The sound output device 563 may be one or more sound output devices 463-1 and 463-2 of FIG. 4A. The sound input device 562 may be one or more sound input devices 462-1, 462-2, and 462-3 of FIG. 4A.

The communication circuitry 570 according to an embodiment may support establishing a wireless communication channel with an external electronic device (e.g., a wireless audio device or another electronic device) of the electronic device 500, and may support performing communication via the established communication channel. The wireless communication according to an embodiment may include short-range wireless communication.

The sensor 580 according to an embodiment may include a 6-axis sensor 581, a magnetic sensor 582, a proximity sensor 583, and/or an optical sensor 584. The sensor 580 according to an embodiment may further include a sensor for obtaining a biometric signal for detecting whether the electronic device 500 is worn by a user. For example, the sensor 580 may further include at least one of a heart rate sensor, a skin sensor, or a temperature sensor. Based on sensing information obtained via the 6-axis sensor 581, the processor 520 according to an embodiment may recognize (or identify) a movement of a user who wears the electronic device 500. For example, the 6-axis sensor 581 may sense a change in a direction in which a user wearing the electronic device 500 faces (or a direction in which a user views through the electronic device 500) and produces a sensor value, and may transfer the produced sensor value or a change of a sensor value to the processor 520. Based on the sensor value or a change in the sensor value obtained via the 6-axis sensor 581, the processor 520 according to an embodiment may perform an AR function or a VR function.

The audio device 561 according to an embodiment may receive, via the sound input device 562, an external sound produced around the electronic device 500 (or a user), and may transfer, to the processor 520, data obtained by converting the received sound.

The communication circuitry 570 according to an embodiment may communicate with an external wireless audio device (e.g., a wireless headset, a wireless earphone, other wireless audio devices) or other electronic devices (e.g., electronic appliance, a smartwatch, or other electronic devices) so as to perform data transmission or reception.

An electronic device (e.g., the electronic device 101 of FIG. 1, the electronic device 201 of FIG. 2, the mobile electronic device 300 of FIG. 3, the XR electronic device 400 of FIG. 4B, or the electronic device 500 of FIG. 5) according to an embodiment may include communication circuitry (e.g., the communication module 190 of FIG. 1 or the communication circuitry 570 of FIG. 5), memory for storing instructions (e.g., the memory 130 of FIG. 1 or the memory 540 of FIG. 5), and a processor (e.g., the processor 120 of FIG. 1 or the processor 520 of FIG. 5). The instructions according to an embodiment, when executed by the processor, may cause the electronic device 500 (or the processor 520) to communicate with an external wireless audio device (e.g., the wireless audio device 202 of FIG. 2) outside the electronic device via the communication circuitry. The instructions according to an embodiment, when executed by the processor, may cause the electronic device 500 (or the processor 520) to identify activation or deactivation of a noise canceling function of the wireless audio device based on a request for audio data transmission to the wireless audio device. The instructions, when executed by the processor, may cause the electronic device 500 (or the processor 520) to transmit a control signal for the activation of the noise canceling function and the audio data to the wireless audio device based on the identifying the activation of the noise canceling function. The instructions, when executed by the processor, may cause the electronic device 500 (or the processor 520) to transmit a control signal for the deactivation of the noise canceling function and the audio data to the wireless audio device based on the identifying the deactivation of the noise canceling function.

The instructions according to an embodiment, when executed by the processor, may cause the electronic device 500 (or the processor 520) to identify activation of an AR function or activation of a VR function based on the request for transmission of the audio data to the wireless audio device. The instructions according to an embodiment, when executed by the processor, may cause the electronic device 500 (or the processor 520) to identify the deactivation of the noise canceling function based on the activation of the AR function, and to identify the activation of the noise canceling function based on the activation of the VR function.

The electronic device according to an embodiment may further include a display (e.g., the display module 160 of FIG. 1 or the display module 550 of FIG. 5) and at least one camera (e.g., the camera module 180 of FIG. 1, the first camera 511 of FIG. 5, the second camera 512 of FIG. 5, or the third camera 513 of FIG. 5). The instructions according to an embodiment, when executed by the processor, may cause the electronic device 500 (or the processor 520) to obtain an image associated with the outside of the electronic device by using the at least one camera, while performing the VR function and to obtain first information associated with an object in the outside of the electronic device by using the obtained image.

The electronic device 500 according to an embodiment may further include a microphone (e.g., the sound input device 562 of FIG. 5). The instructions according to an embodiment , when executed by the processor, may cause the electronic device 500 (or the processor 520) to obtain a sound from the outside of the electronic device by using the microphone 562, while performing the VR function, and to obtain second information associated with the sound from the outside of the electronic device 500.

The instructions according to an embodiment, when executed by the processor, may cause the electronic device 500 (or the processor 520) to obtain operation information of an external electronic device from the external electronic device connected with the electronic device 500 via the communication circuitry 570, while performing the VR function, and to obtain third information related to an operation of the external electronic device by using the operation information of the external electronic device.

The electronic device according to an embodiment may further include a sensor (e.g., the sensor module 176 of FIG. 1 or the sensor 580 of FIG. 5).

The instructions according to an embodiment, when executed by the processor, may cause the electronic device 500 (or the processor 520) to obtain fourth information related to an external environment of the electronic device 500 by using sensing information obtained by the sensor 580 while performing the VR function.

The instructions according to an embodiment, when executed by processor, may cause the electronic device 500 (or the processor 520) to identify whether the specified first condition is satisfied based on at least one of the first information, the second information, the third information, or the fourth information, and, based on the specified first condition being satisfied, to display visual information corresponding to the specified first condition on the display 550 or to transmit, to the wireless audio device, a signal for performing control so as to lower a level of the noise canceling function.

The instructions according to an embodiment, when executed by the processor, may cause the electronic device 500 (or the processor 520) to identify whether the specified second condition is satisfied based on at least one of the first information, the second information, the third information or the fourth information, and, based on the specified second condition being satisfied, to stop performing the VR function, and to transmit a noise cancelling function deactivation control signal or an ambient sound listening function control signal to the wireless audio device.

The instructions according to an embodiment , when executed by the processor, may cause the electronic device 500 (or the processor 520) to stop the VR function and to activate the AR function based on the specified second condition being satisfied.

An electronic device (the electronic device 101 of FIG. 1 or the electronic device 500 of FIG. 5) according to an embodiment may include communication circuitry (e.g., the communication module 190 of FIG. 1 or the communication circuitry 570 of FIG. 5), memory (the memory 130 of FIG. 1 or the memory 540 of FIG. 5) for storing instructions, and a processor (the processor 120 of FIG. 1 or the processor 520 of FIG. 5). The instructions, when executed by the processor, may cause the electronic device 500 to activate a VR function based on a request for performing the VR function, while performing an AR function, or to activate the AR function based on a request for performing the AR function, while performing the VR function. The instructions according to an embodiment , when executed by the processor, may cause the electronic device 500 to transmit, based on the activation of the VR function, a noise cancelling function activation control signal to a wireless audio device connected to the electronic device 500 by using the communication circuitry 570. The instructions according to an embodiment, when executed by the processor, may cause the electronic device 500 to transmit, based on the activation of the AR function, a noise cancelling function deactivation control signal or an ambient sound listening control signal to the wireless audio device connected to the electronic device by using the communication circuitry 570.

An electronic device according to an embodiment may further include a display (e.g., the display module 160 of FIG. 1 or the display 550 of FIG. 5), at least one camera 180, 511, 512, or 513, a microphone, and a sensor (e.g., the sensor module 176 of FIG. 1 or the sensor 580 of FIG. 5). The instructions according to an embodiment, when executed by the processor, may cause the electronic device 500 to obtain information associated with an ambient environment of the electronic device 500 using at least one among the at least one camera 511, 512, and 513, the microphone 562, the communication circuitry 570, and the sensor 580, while performing the VR function. The information associated with the ambient environment of the electronic device 500 according to an embodiment may include at least part among first information, which is associated with an object outside the electronic device 500, obtained based on an image captured by the at least one camera 511, 512, and 513, second information, which is associated with a sound outside the electronic device 500, obtained via the microphone 562, third information, which is associated with an operation of an external electronic device, received from the external electronic device connected to the electronic device 500 via the communication circuitry 570, and fourth information, which is associated with an external environment of the electronic device 500, obtained by using sensing information obtained via the sensor 580.

The instructions according to an embodiment , when executed by the processor, may cause the electronic device 500 to identify whether the specified first condition is satisfied based on the information associated with the ambient environment of the electronic device 500, to display, based on the specified first condition being satisfied, visual information corresponding to the specified first condition on the display, or to transmit an ambient sound listening control signal to the wireless audio device.

The instructions according to an embodiment, when executed by the processor, may cause the electronic device 500 to identify whether the specified second condition is satisfied based on the information associated with the ambient environment of the electronic device 500, and, based on the specified second condition being satisfied, to stop performing the VR function and to transmit the noise cancelling function deactivation control signal or the ambient sound listening function control signal to the wireless audio device.

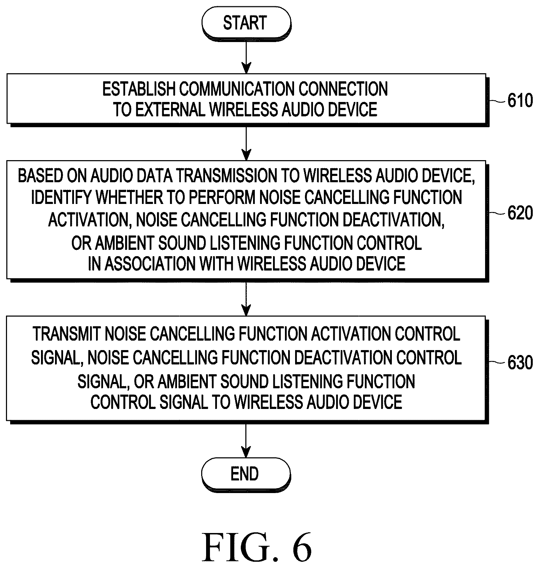

FIG. 6 is a flowchart of operations for controlling noise cancelling of a wireless audio device by an electronic device according to an embodiment of the disclosure.

Referring to FIG. 6, a processor (e.g., the processor 120 of FIG. 1 or the processor 520 of FIG. 5) of an electronic device (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) may perform at least one of operation 610, operation 620, and operation 630. In an embodiment, at least one of operations 610, 620, and 630 may be omitted, some operations may be performed in a different order, or another operation may be added.

In operation 610, the processor 520 according to an embodiment may establish communication connection to an external wireless audio device (e.g., the electronic device 102 of FIG. 1 or the wireless audio device 202 of FIG. 2) via the communication circuitry 570. In the case of connecting to a pair of wireless earphones, the processor 520 according to an embodiment may establish communication connection to the pair of wireless earphones, respectively, or may establish communication connection to one earphone and may perform sniffing based on communication connected to the one earphone for the remaining other earphone, so as to receive data from the electronic device 500.

In operation 620, based on audio data transmission to the wireless audio device, the processor 520 according to an embodiment may identify whether to perform noise canceling function activation, noise cancelling function deactivation, or ambient sound listening function control. Based on a request for audio data transmission via communication connection to the wireless audio device, the processor 520 according to an embodiment may identify whether to perform noise canceling function activation, noise cancelling function deactivation, or ambient sound listening function control in association with the wireless audio device. While broadcasting audio data (by using a broadcast isochronous stream), the processor 520 according to an embodiment may identify whether to perform noise canceling function activation, noise cancelling function deactivation, or ambient sound listening function control in association with the wireless audio device that receives the broadcasted audio data. Based on audio data transmission from an external electronic device (not illustrated) (e.g., an audio data provision vhs device) to the wireless audio device, while being in communication connection with the wireless audio device, the processor 520 according to an embodiment may identify whether to perform noise cancelling function activation, noise cancelling function deactivation, or ambient sound listening function control of the wireless audio device.

A noise cancelling function according to an embodiment may be a function that enables a user not to listen to an ambient sound other than an audio data sound via the wireless audio device. A noise cancelling deactivation function according to an embodiment may be a function that turns off noise cancelling activation of the wireless audio device. An ambient sound listening function according to an embodiment may be a function that enables a user to listen to an ambient sound other than an audio data sound via the wireless audio device. The ambient sound listening function according to an embodiment may be a function that enables a user who wears the wireless audio device to listen to an ambient sound in the state in which noise cancelling is deactivated. For example, the ambient sound listening function may be a function in which the wireless audio device enables a user to listen to an ambient sound other than an audio data sound at a specified ambient sound listening level (e.g., a low, medium, or high level). For example, in the case in which the ambient sound listening level is specified to be (or set to) a low level, the processor 520 may perform control so as to transmit a low-level ambient sound listening function control signal to the wireless audio device, and the wireless audio device may operate based on the low-level ambient sound listening control signal so that an ambient sound is provided at the specified low level. For example, in the case in which the ambient sound listening level is specified to be (or set to) a medium level, the processor 520 may perform control so as to transmit a medium-level ambient sound listening function control signal to the wireless audio device, and the wireless audio device may operate based on the medium-level ambient sound listening control signal so that an ambient sound is provided at the specified medium level. For example, in the case in which the ambient sound listening level is specified to be (or set to) a high level, the processor 520 may perform control so as to transmit a high-level ambient sound listening function control signal to the wireless audio device, and the wireless audio device may operate based on the high-level ambient sound listening control signal so that an ambient sound is provided at the specified high level. The ambient sound listening level according to an embodiment may be adjusted in various levels according to a user setting in addition to the low, medium, and high levels. In the case in which the ambient sound listening level is specified to be (or set to) high, the processor 520 according to an embodiment may amplify an ambient sound received via the sound input device 562 and may output the same via the sound output device 563.

The processor 520 according to an embodiment may identify AR function activation (or an AR mode) or VR function activation (or a VR mode) based on a request for audio data transmission to the wireless audio device, and may identify noise cancelling function deactivation control or ambient sound listening function control based on the AR function activation and may identify noise cancelling function activation control based on the VR function activation. Based on a request for audio data transmission to an external wireless audio device in an AR function activation state, the processor 520 according to an embodiment may identify noise cancelling function deactivation control or ambient sound listening function control with respect to the wireless audio device. Based on a request for audio data transmission to an external wireless audio device in a VR function activation state, the processor 520 according to an embodiment may identify noise cancelling function activation control with respect to the wireless audio device.

The processor 520 according to an embodiment may identify AR function activation upon input of an AR button or may identify VR function activation upon input of a VR button, during audio data transmission from the electronic device 500 or an external electronic device (not illustrated) to the wireless audio device. The processor 520 according to an embodiment may identify switch from AR function activation to VR function activation (AR function deactivation and VR function activation) upon input of an AR/VR switch button, or may identify switch from VR function activation to AR function activation (VR function deactivation and AR function activation) during audio data transmission from the electronic device 500 or an external electronic device (not illustrated) to the wireless audio device. In the case in which AR function activation is identified during audio data transmission to the wireless audio device, the processor 520 according to an embodiment may identify noise cancelling function deactivation control or ambient sound listening function control with respect to the wireless audio device. In the case in which VR function activation is identified during audio data transmission to the wireless audio device, the processor 520 according to an embodiment may identify noise cancelling function activation control with respect to the wireless audio device.

In operation 630, based on identification of the noise cancelling function activation, noise cancelling function deactivation, or ambient sound listening function with respect to the wireless audio device, the processor 520 according to an embodiment may transmit a noise cancelling function activation control signal, a noise cancelling function deactivation control signal, or an ambient sound listening function control signal to the wireless audio device. The processor 520 according to an embodiment may transmit a noise cancelling function activation control signal, a noise cancelling activation control signal, or an ambient sound listening function control signal to be applied in association with output of audio data that is transmitted to the wireless audio device or that is received by the wireless audio device. When audio data transmission to an external wireless audio device is requested in an AR function activation state, the processor 520 according to an embodiment may transmit a noise cancelling function deactivation control signal or an ambient sound listening function control signal to the wireless audio device, and may transmit audio data to the wireless audio device. When audio data transmission to an external wireless audio device is requested in a VR function activation state, the processor 520 according to an embodiment may transmit a noise cancelling function activation control signal to the wireless audio device and, subsequently, may transmit audio data to the wireless audio device.

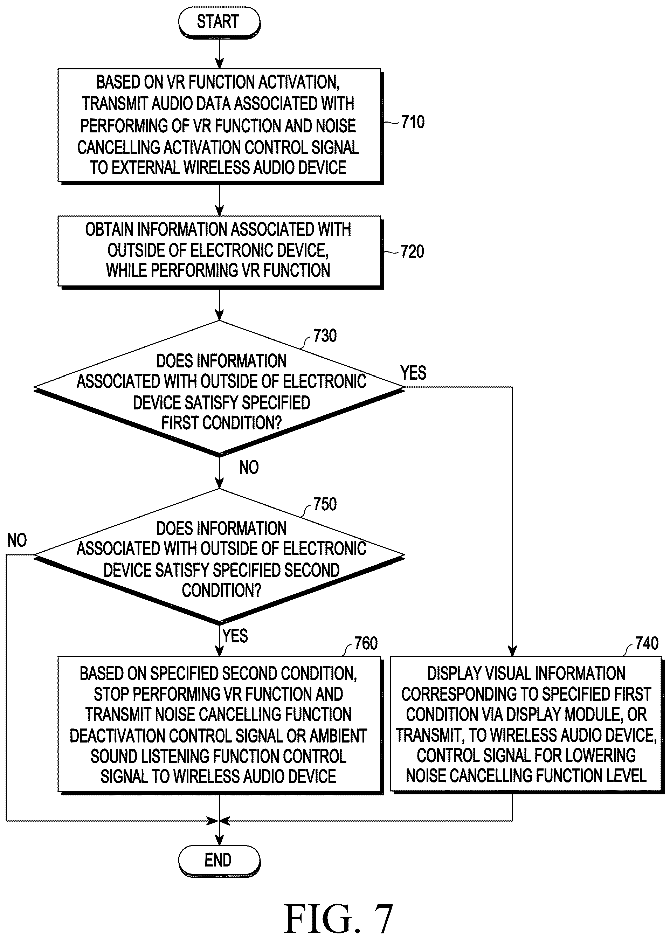

FIG. 7 is a flowchart of operations for controlling noise cancelling of an external wireless audio device in a VR function activation state of an electronic device according to an embodiment of the disclosure.

Referring to FIG. 7, a processor (e.g., the processor 120 of FIG. 1 or the processor 520 of FIG. 5) of an electronic device (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) may perform at least one of operation 710, operation 720, operation 730, operation 740, operation 750, and operation 760. In an embodiment, at least one of operations 710, 720, 730, 740, 750, and 760 may be omitted, some operations may be performed in a different order, or another operation may be added.

In operation 710, the processor 520 according to an embodiment may transmit audio data associated with performing of a VR function based on VR function activation, and a noise cancelling activation control signal to an external wireless audio device. For example, audio data associated with performing of the VR function may include audio data corresponding to the VR function or a VR content and/or audio data (e.g., music) of which output is requested separately from the provision of the VR function or VR content.

In operation 720, the processor 520 according to an embodiment may obtain information associated with the outside of the electronic device 500, while performing the VR function. While performing the VR function, the processor 520 according to an embodiment may obtain at least one piece of information among first information associated with an object outside the electronic device 500, second information associated with a sound outside the electronic device 500, third information associated with an operation of an external electronic device outside the electronic device 500, and fourth information associated with an external environment of the electronic device 500. The processor 520 according to an embodiment may obtain a shot image and/or sensing information in association with an environment outside the electronic device 500 by using at least one of first to third cameras 511 to 513 and/or a sensor 580, while performing the VR function, and may obtain, using the shot image and/or sensing information, first information associated with an object (or ambient object) (e.g., a human, an animal, or an obstacle) outside the electronic device 500 (e.g., an object shape, an external object location, proximity of an external object, a size of an external object, and/or other information associated with an external object). While performing the VR function, the processor 520 according to an embodiment may obtain a sound outside the electronic device 500 by using the sound input device 562 (e.g., a microphone) and may obtain second information associated with a sound outside the electronic device 500 (e.g., a sound type, a sound size, and/or other information associated with a sound outside) by using the obtained external sound. The processor 520 according to an embodiment may obtain operation information of an external other electronic device from the other electronic device (not illustrated) connected using the communication circuitry 570, while performing the VR function, and may obtain third information associated with an operation of the external other electronic device (e.g., operation information of an induction heater, a digital door lock, or other operation information) by using the obtained operation information of the other electronic device. The processor 520 according to an embodiment may obtain external environment sensing information (e.g., temperature, light intensity, and/or GPS information) of the electronic device 500 by using the sensor 580 and may obtain fourth information associated with an external environment (e.g., an external temperature, an external light intensity, and/or location information) by using the external environment sensing information, while performing a VR function.

In operation 730, based on the first information associated with an external object, the second information associated with an external sound, the third information associated with an operation of an external other electronic device, and/or the fourth information associated with an external environment, the processor 520 according to an embodiment may identify whether information associated with the outside (e.g., an ambient environment) of the electronic device 500 satisfies a specified first condition. The specified first condition according to an embodiment may be a low-risk state condition for reporting, to a user, an external object, an external sound, an operation of an external other electronic device, and/or an external environment.

In operation 740, in the case in which the ambient environment of the electronic device 500 satisfies the specified first condition, the processor 520 according to an embodiment may display visual information (e.g., an external object, an external sound, an operation of an external other electronic device, and/or low-risk state information associated with an external environment) via the display module 550, or may transmit a control signal to the wireless audio device in order to lower the level of a noise cancelling function.

In operation 750, in the state in which the information associated with the outside of the electronic device 500 does not satisfy the first condition, the processor 520 according to an embodiment may identify whether the ambient environment of the electronic device 500 satisfies a specified second condition, based on the first information associated with an external object, the second information associated with an external sound, the third information associated with an operation of an external other electronic device, and/or the fourth information associated with an external environment. The specified second condition according to an embodiment may be a high-risk state condition for warning a user about an external object, an external sound, an operation of an external other electronic device, and/or an external environment.

According to an embodiment, in the case in which an external object is close enough to fall within a specified first distance to a user, this is a low-risk state condition for reporting the same to the user. In the case in which an external object is close enough to fall within a second distance to the user, which is closer than the specified first distance, this is a high-risk state condition for warning the user about the same. According to an embodiment, in the case in which an external sound is a first type of sound and/or a first intensity of sound, this may be a low-risk state condition for reporting the same to a user. In the case in which an external sound is a second type of sound and/or a second intensity of sound, this may be a high-risk state condition for warning the user about the same. According to an embodiment, in the case in which an operation of an external other electronic device is a first operation that needs to be recognized by a user, this may be a low-risk state condition for reporting the same to the user. In the case in which an operation of an external other electronic device is a second operation about which a user needs to be warned, this may be a high-risk state condition for warning the user about the same. According to an embodiment, in the case in which an external environment is a first environment (e.g., a first temperature or higher, a first optical intensity or higher, or a first location) needs to be recognized by a user, this may be a low-risk state condition for reporting the same to the user. In the case in which an external environment is a second environment (e.g., a second temperature or higher, a second optical intensity or higher, or a second location) about which a user needs to be warned, this may be a high-risk state condition for warning the user.

In operation 760, in the case in which the ambient environment of the electronic device 500 satisfies the specified second condition, the processor 520 according to an embodiment may stop, based on the specified second condition, performing the VR function, and may transmit a noise cancelling function deactivation control signal or an ambient sound listening function control signal to the wireless audio device. In the case in which the ambient environment of the electronic device 500 satisfies the specified second condition, the processor 520 according to an embodiment may stop performing the VR function, and may activate an AR function.

Although an example of identifying whether the information associated with the outside of the electronic device 500 satisfies the specified first condition first, as shown in operation 730, has been described in the description of FIG. 7 according to an embodiment, whether the information associated with the outside of the electronic device 500 satisfies the specified second condition may be identified first, as shown in operation 750, and operation 730 may be performed. The processor 520 according to an embodiment may periodically perform operation 720, operation 730, and/or operation 750.

A method of controlling a noise cancelling function of a wireless audio device (e.g., the electronic device 102 of FIG. 1 or the electronic device 202 of FIG. 2) by an electronic device (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) may include an operation of performing communication with a wireless audio device outside the electronic device via a communication circuitry (e.g., the communication module 190 of FIG. 1 or the communication circuitry 570 of FIG. 5). Based on a request for audio data transmission to the wireless audio device, the method according to an embodiment may include an operation of identifying noise cancelling function activation or deactivation of the wireless audio device. The method according to an embodiment may include an operation of transmitting, based on the identification of the noise cancelling function activation, a noise cancelling function activation control signal and the audio data to the wireless audio device, or an operation of transmitting, based on identification of the noise cancelling function deactivation, a noise cancelling deactivation control signal and the audio data to the wireless audio device.

The method according to an embodiment may further include an operation of identifying AR function activation or VR function activation based on a request for transmitting the audio data to the wireless audio device. The method according to an embodiment may further include an operation of identifying the noise cancelling function deactivation based on the AR function activation, or an operation of identifying the noise cancelling function activation based on the VR function activation.

The method according to an embodiment may further include an operation of performing a VR function based on the VR function activation, and obtaining information associated with an ambient environment of the electronic device by using at least one among at least one camera (e.g., the camera module 180 of FIG. 1 or first through third cameras 511, 512, and 513 of FIG. 5), a microphone (e.g., the sound input device of FIG. 5), the communication circuitry (e.g., the communication module 190 of FIG. 1 or the communication circuitry 570 of FIG. 5), and a sensor (e.g., the sensor module 176 of FIG. 1 or the sensor 580 of FIG. 5).

In the method according to an embodiment, the information associated with the ambient environment of the electronic device 500 may include at least some among first information, which is associated with an object outside the electronic device 500, obtained based on an image captured by the at least one camera 180, 511, 512, and 513, second information, which is associated with a sound the outside the electronic device 500, obtained via the microphone 564, third information, which is associated with an operation of an external electronic device, received from the external electronic device connected to the electronic device 500 via the communication circuitry 570, and fourth information, which is associated with an external environment of the electronic device 500, obtained by using sensing information obtained via the sensor 580.

The method according to an embodiment may further include an operation of obtaining an image associated with the outside of the electronic device 500 by using the at least one camera 180, 511, 512, and 513, while performing the VR function based on the VR function activation. The method according to an embodiment may further include an operation of obtaining first information associated with an object outside the electronic device 500 by using the obtained image.

The method according to an embodiment may further include an operation of obtaining a sound outside the electronic device 500 by using the microphone 564, while performing the VR function based on the VR function activation. The method according to an embodiment may further include an operation of obtaining second information associated with a sound outside the electronic device 500 by using the obtained sound.

The method according to an embodiment may further include an operation of obtaining operation information of an external other electronic device from the other electronic device connected to the electronic device 500 via the communication circuitry 570, while performing the VR function based on the VR function activation. The method according to an embodiment may further include an operation of obtaining third information associated with an operation of the other electronic device by using the obtained operation information of the other electronic device.

The method according to an embodiment may further include an operation of identifying whether the specified first condition is satisfied based on the information associated with the ambient environment of the electronic device 500. The method according to an embodiment may further include an operation of displaying visual information corresponding to the specified first condition on the display or transmitting, to the wireless audio device, a control signal for lowering a noise cancelling function level based on the specified first condition being satisfied.

The method according to an embodiment may further include an operation of identifying whether the specified second condition is satisfied based on the information associated with the ambient environment of the electronic device 500. The method according to an embodiment may further include an operation of stopping performing of the VR function, and transmitting a noise cancelling function deactivation control signal or an ambient sound listening function control signal to the wireless audio device, based on the specified second condition being satisfied.

The method according to an embodiment may further include an operation of stopping performing of the VR function and activating the AR function, based on the specified second condition being satisfied.

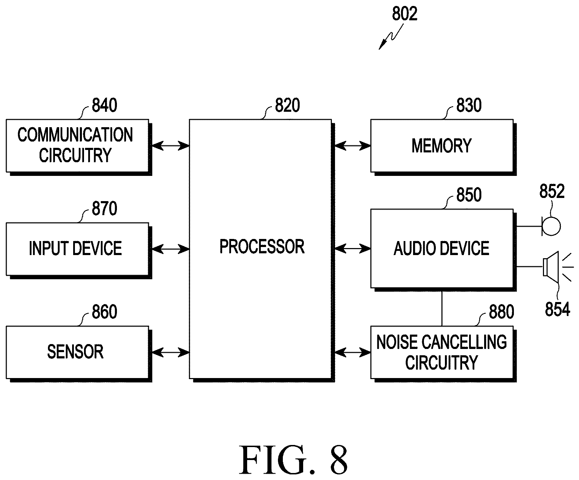

FIG. 8 is a block diagram of a wireless audio device according to an embodiment of the disclosure.

Referring to FIG. 8, a wireless audio device 802 (e.g., the electronic device 102 of FIG. 1 or the electronic device 202 of FIG. 2) may be an ear-wearable device configured as a pair of earphones (or earphones for both ears) (e.g., earbuds) or a headset. The wireless audio device 802 according to an embodiment may be configured to be connected to an electronic device (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (hereinafter, a description is provided by using the electronic device 500 of FIG. 5 as an example) in a wired manner. The wireless audio device 802 according to an embodiment may establish a communication link (e.g., a communication link using short-range communication technology (e.g., Bluetooth communication technology) or a wired communication link (or a connection)) with an electronic device. The wireless audio device 802 according to an embodiment may receive a noise cancelling activation control signal, a noise cancelling deactivation control signal, or an ambient sound listening function control signal, and audio data from the electronic device 500 via the communication link. The wireless audio device 802 according to an embodiment may receive audio data broadcasted via a BIS, and may receive a noise cancelling activation control signal, a noise cancelling deactivation control signal, or an ambient sound listening function control signal, and audio data from the electronic device 500. For ease of description, in the document, the configuration of one earphone of a pair of earphones may be described as the configuration of the electronic device 802. A technical feature of the electronic device 802 may be equivalently applied to the other earphone of the pair.

The wireless audio device 802 according to an embodiment may include a processor 820, memory 830, a communication circuitry 840, an audio device 850, a sensor 860, an input device 870, a noise cancelling circuitry 880, at least one microphone 852, and at least one speaker 854.

The processor 820 according to an embodiment may receive data from another component element of the wireless audio device 802, for example, the memory 830, the communication circuitry 840, the audio device 850, the sensor 860, the input device 870, the noise cancelling circuitry 880, the at least one microphone 852, or the at least one speaker 854, may perform an operation based on the received data, and may transfer a signal for controlling the other component element to the other component element. The processor 820 according to an embodiment may communicate with the electronic device 500 via the communication circuitry 840. The processor 820 according to an embodiment may receive a noise cancelling function activation control signal, a noise cancelling function deactivation control signal, or an ambient sound listening function control signal, and audio data from the electronic device 500 via the communication circuitry 840. Based on reception of a noise cancelling function activation control signal, the processor 820 according to an embodiment may perform control so that the noise cancelling circuitry 880 activate (or perform) a noise cancelling function when reproducing audio data. Based on reception of a noise cancelling function deactivation control signal, the processor 820 according to an embodiment may perform control so that the noise cancelling circuitry 880 deactivate (or does not perform) a noise cancelling function when reproducing audio data. Based on reception of an ambient sound listening function control signal, the processor 820 according to an embodiment may perform control so that the noise cancelling circuitry 880 performs an ambient sound listening function, when reproducing audio data.

Based on a user input via the input device 870, the processor 820 according to an embodiment may control the noise cancelling circuitry 880 so as to deactivate the noise cancelling function in the state in which the noise cancelling function is activated, may control the noise cancelling circuitry 880 so as to activate the noise cancelling function in the state in which the noise cancelling function is deactivated, may control the noise cancelling circuitry 880 so that the ambient sound listening function is performed in the state in which the noise cancelling function is deactivated, or may control the noise cancelling circuitry 880 so that the noise cancelling function is deactivated in the state in which the ambient sound listening function is performed.

The memory 830 according to an embodiment may store instructions (or commands or programs) configured to cause the processor 820 to operate a specified operation when the instructions are executed. The memory 830 according to an embodiment may store instructions configured to cause component elements other than the processor 820 to perform specified operations. The memory 830 according to an embodiment may store obtained audio data that is received via the communication circuitry 840.

The communication circuitry 840 according to an embodiment may perform communication (e.g., short-range wireless communication) with the electronic device 500. For example, the short-range wireless communication may include at least one of Bluetooth, Bluetooth log energy (BLE), infrared data association (IrDA), or a wireless LAN. The type of communication supported by the communication circuitry 840 may not be limited. The communication circuitry 840 according to an embodiment may receive a noise cancelling function activation control signal, a noise cancelling function deactivation control signal, or an ambient sound listening function control signal, and audio data from the electronic device 500.

The audio device 850 according to an embodiment may convert audio data into an analog audio signal, and may output the same via the at least one speaker 854. The audio device 850 according to an embodiment may convert an audio signal received via the at least one microphone 852 into audio data, and may provide the same to the processor 820.

The noise cancelling circuitry 880 according to an embodiment may include a noise cancelling circuitry (not illustrated), at least one microphone (not illustrated) (e.g., at least one noise cancelling circuitry microphone), and at least one speaker (not illustrated) (e.g., at least one speaker for a noise cancelling circuitry). The noise cancelling circuitry 880 according to an embodiment may offset or block external noise that disturbs an output analog audio signal corresponding to the audio data by using a noise cancelling circuitry, at least one microphone (not illustrated), and at least one speaker (not illustrated). The noise cancelling circuitry 880 according to an embodiment may analyze the waves of external noise received using at least one microphone (not illustrated), and may offset the noise by producing (or outputting), via at least one speaker (not illustrated), waves having a phase opposite thereto by using a noise cancelling circuitry.

The sensor 860 according to an embodiment may include a biometric sensor for detecting whether a user wears the wireless audio device 802. For example, the biometric sensor may include at least one of a heart rate sensor, a skin sensor, or a temperature sensor.

The input device 870 according to an embodiment may receive at least one input by a user. At least one input by a user according to an embodiment may include an input associated with power on or off, stopping or starting of audio data output, noise cancelling function activation, noise cancelling function deactivation, or an ambient sound listening function of the wireless audio device.

The wireless audio device (e.g., the wireless audio device 202 of FIG. 2 or the wireless audio device 802 of FIG. 8) according to an embodiment may include a communication circuitry (e.g., the communication circuitry 840 of FIG. 8), an audio device (e.g., the audio device 850 of FIG. 8), a noise cancelling circuitry (e.g., the noise cancelling circuitry 880 of FIG. 8), memory (e.g., the memory 830 of FIG. 8) for storing instructions and a processor (e.g., the processor 820 of FIG. 8). The instructions according to an embodiment, when executed by the processor, may cause the wireless audio device to communicate with an external electronic device (e.g., the electronic device 101 of FIG. 1, the electronic device 201 of FIG. 2, or the electronic device 500 of FIG. 5) via the communication circuitry 840. The instructions according to an embodiment, when executed by the processor, may cause the wireless audio device to receive audio data from the electronic device. Based on reception of a noise cancelling function activation control signal from the electronic device, the instructions according to an embodiment, when executed by the processor, may cause the wireless audio device to control the noise cancelling circuitry so as to activate the noise cancelling function, when reproducing the audio data. Based on reception of a noise cancelling function deactivation control signal from the electronic device, the instructions according to an embodiment, when executed by the processor, may cause the wireless audio device to control the noise cancelling circuitry so as to deactivate the noise cancelling function, when reproducing the audio data.

The wireless audio device according to an embodiment may further include an input device (e.g., the input device 870 of FIG. 8). The instructions according to an embodiment, when executed by the processor, may cause the wireless audio device to control, based on a user input via the input device 870, the noise cancelling circuitry so as to deactivate the noise cancelling function or activate the noise cancelling function.

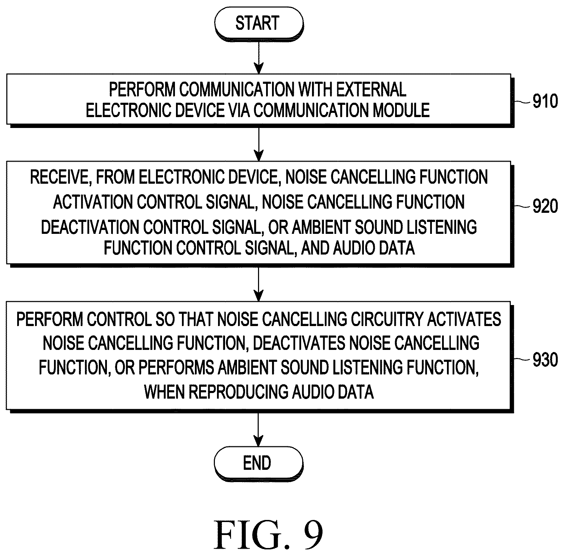

FIG. 9 is a flowchart illustrating operation of a wireless audio device according to an embodiment of the disclosure.

Referring to FIG. 9, a processor (e.g., the processor 820 of FIG. 8) of a wireless audio device (e.g., the electronic device 102 of FIG. 1, the wireless audio device 202 of FIG. 2, or the wireless audio device 802 of FIG. 8) according to an embodiment may perform at least one operation among operation 910, operation 920, and operation 930. In an embodiment, at least one of operations 910, 920, and 930 may be omitted, some operations may be performed in a different order, or another operation may be added.

In operation 910, the processor 820 according to an embodiment may communicate with the electronic device 500 via the communication circuitry 840. The processor 820 according to an embodiment may perform Bluetooth low energy (BLE) communication with the electronic device 500 via the communication circuitry 840 in parallel with performing communication with another wireless audio device that is paired with the wireless audio device 802. The processor 820 according to an embodiment may enable the other wireless audio device to obtain, via sniffing, data or signal that is transmitted from the electronic device 500 to the wireless audio device. Based on control via communication with the electronic device 500, the processor 820 according to an embodiment may perform communication with another audio data providing device that provides audio data via the communication circuitry 840.

In operation 920, the processor 820 according to an embodiment may receive a noise cancelling function activation control signal, a noise cancelling function deactivation control signal, or a noise cancelling control signal, and audio data from the electronic device 500 via the communication circuitry 840. The processor 820 according to an embodiment may receive audio data broadcasted from a broadcast isochronous stream (BIS) source device by synchronizing with the BIS source device (e.g., an external electronic device), as opposed to receiving audio data from the electronic device 500.

In operation 930, based on reception of a noise cancelling function activation control signal, a noise cancelling deactivation control signal, or an ambient sound listening function control signal, the processor 820 according to an embodiment may perform control so that the noise cancelling circuitry 880 activates (or performs) a noise cancelling function, deactivates (or does not perform) a noise cancelling function, or to perform an ambient sound listening function, when reproducing the audio data. A noise cancelling function according to an embodiment may be a function that enables a user not to listen to an ambient sound other than an audio data sound via the wireless audio device 202. A noise cancelling deactivation function according to an embodiment may be a function that turns off noise cancelling activation of the wireless audio device 202. An ambient sound listening function according to an embodiment may be a function that enables a user to listen to an ambient sound other than an audio data sound via the wireless audio device 202. The ambient sound listening function according to an embodiment may be a function that enables a user who wears a wireless audio device to listen to an ambient sound in the state in which noise cancelling is deactivated. For example, the ambient sound listening function may be a function in which the wireless audio device 202 enables a user to listen to an ambient sound other than an audio data sound at a specified ambient sound listening level (e.g., a low, medium, or high level). For example, in the case in which an ambient sound listening level is specified to be (or set to) a low level, the electronic device 201 may transmit a low-level ambient sound listening function control signal to the wireless audio device 202, and the wireless audio device 202 may operate based on the low-level ambient sound listening control signal so that an ambient sound is provided at the specified low level. For example, in the case in which an ambient sound listening level is specified to be (set to) a medium level, the electronic device 201 may transmit a medium-level ambient sound listening function control signal to the wireless audio device 202, and the wireless audio device 202 may operate based on the medium-level ambient sound listening control signal so that an ambient sound is provided at the specified medium level. For example, in the case in which an ambient sound listening level is specified to be (set to) a high level, the electronic device 201 may transmit a high-level ambient sound listening function control signal to the wireless audio device 202, and the wireless audio device 202 may operate based on the high-level ambient sound listening control signal so that an ambient sound is provided at the specified high level. The ambient sound listening level according to an embodiment may be adjusted in various levels according to a user setting in addition to the low, medium, and high levels. An operation method of a wireless audio device (e.g., the wireless audio device 202 of FIG. 2 or the wireless audio device 802 of FIG. 8) according to an embodiment may include an operation of performing communication with an external electronic device (e.g., the electronic device 101 of FIG. 1, the electronic device 201 of FIG. 2, or the electronic device 500 of FIG. 5) via a communication circuitry (e.g., the communication circuitry 840 of FIG. 8). The method according to an embodiment may include an operation of receiving audio data from the electronic device. Based on reception of a noise cancelling function activation control signal from the electronic device, the method according to an embodiment may include an operation of activating the noise cancelling function, when reproducing the audio data. Based on reception of a noise cancelling function deactivation control signal from the electronic device, the method according to an embodiment may include an operation of deactivating the noise cancelling function, when reproducing the audio data.

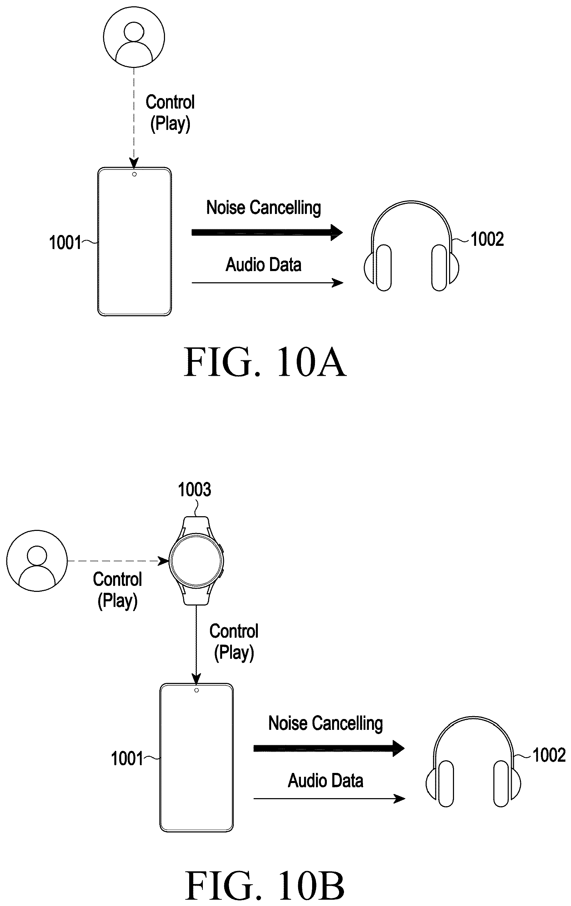

FIG. 10A is a diagram illustrating an example of transmitting, based on a user input, a noise cancelling activation signal and audio data to a wireless audio device by a mobile electronic device according to an embodiment of the disclosure.

Referring to FIG. 10A, a mobile electronic device 1001 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., a smartphone) according to an embodiment may execute an application, and may identify a user input (e.g., an audio data reproduction request) (control (play)) using a control interface of the application. Based on an audio reproduction request, the mobile electronic device 1001 according to an embodiment may transmit a noise cancelling function activation control signal (noise cancelling) and audio data to a wireless audio device 1002. In the case in which noise cancelling activation and audio reproduction are configured to interoperate, the mobile electronic device 1001 according to an embodiment may transmit, based on an audio reproduction request, a noise cancelling function activation control signal (noise cancelling) and audio data to a wireless audio device 1002.

The wireless audio device 1002 according to an embodiment may receive the noise cancelling function activation control signal and audio data from the mobile electronic device 1001, and may activate a noise cancelling function when reproducing the audio data.

FIG. 10B is a diagram illustrating an example of transmitting, based on a control signal from another electronic device, a noise cancelling activation signal and audio data to a wireless audio device by a mobile electronic device according to an embodiment of the disclosure.

Referring to FIG. 10B, the mobile electronic device 1001 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., a smartphone) according to an embodiment may receive an audio data reproduction request (control (play)) from another electronic device 1003 (e.g., a smartwatch) connected via separate communication. Based on the audio reproduction request received from the other electronic device 1003 connected via communication, the mobile electronic device 1001 according to an embodiment may transmit a noise cancelling function activation control signal (noise cancelling) and audio data to the wireless audio device 1002. In the case in which noise cancelling activation and audio reproduction are configured to interoperate, the mobile electronic device 1001 according to an embodiment may transmit a noise cancelling function activation control signal (noise cancelling) and audio data to the wireless audio device 1002 based on the audio reproduction request received from the other electronic device 1003. The wireless audio device 1002 according to an embodiment may receive the noise cancelling function activation control signal and audio data from the mobile electronic device 1001, and may activate a noise cancelling function when reproducing audio data. Based on the audio reproduction request, the other electronic device 1003 according to an embodiment may directly transmit a noise cancelling function activation control signal (noise cancelling) and audio data to the wireless audio device 1002.

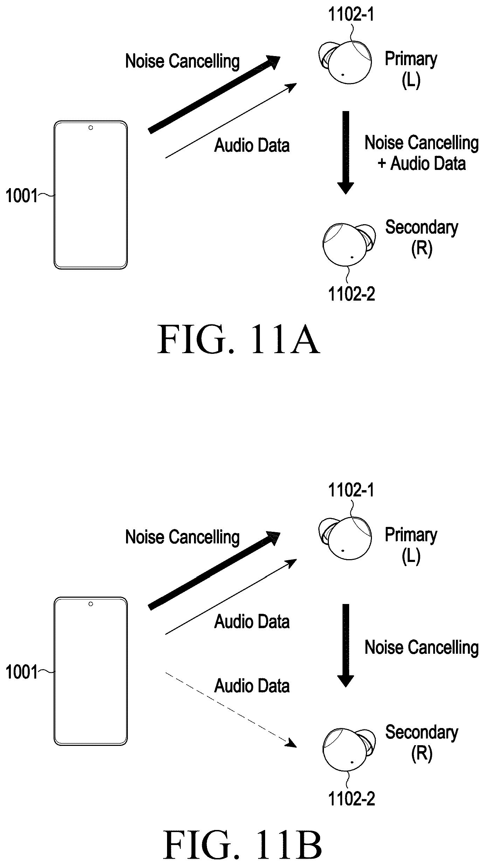

FIG. 11A is a diagram illustrating an example of transmitting a noise cancelling activation control signal and audio data to one wireless audio device in a pair of wireless audio devices by a mobile electronic device according to an embodiment of the disclosure.

Referring to FIG. 11A, when the mobile electronic device 1001 transmits a noise cancelling activation control signal (noise cancelling) and audio data to one wireless audio device (e.g., a first wireless audio device 1102-1) in a pair of (or in both) wireless audio devices 1102-1 and 1102-2, the first wireless audio device 1102-1 may transfer (relay) the noise cancelling activation control signal (noise cancelling) and audio data (audio data) to the other electronic device, that is, a second wireless audio devices 1102-2.

Referring to FIG. 11A, the mobile electronic device 1001 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., a smartphone) according to an embodiment may execute an application, and may identify a user input (e.g., an audio data reproduction request) (control (plate)) using a control interface of the application. Based on an audio reproduction request, the mobile electronic device 1001 according to an embodiment may transmit a noise cancelling activation control signal and audio data to the first wireless audio device 1102-1 (primary (L)) in the pair of (or in both) the wireless audio devices 1102-1 and 1102-2. The first wireless audio device 1102-1 (primary (L)) according to an embodiment may transmit the received noise cancelling activation control signal (noise cancelling) and audio data to the second wireless audio device 1102-2 (secondary (R)) via separate communication with the second wireless audio device 1102-2 (secondary (R)). The first wireless audio device 1102-1 (primary (L)) and the second wireless audio device 1102-2 (secondary (R)) according to an embodiment may output audio data, while performing audio data reproduction synchronization.

FIG. 11B is a diagram illustrating an example of transmitting a noise cancelling activation signal and audio data to one wireless audio device in a pair of wireless audio devices and transmitting audio data to the other wireless audio device, by a mobile electronic device according to an embodiment of the disclosure.

Referring to FIG. 11B, when the mobile electronic device 1001 transmits a noise cancelling activation control signal (noise cancelling) and audio data to one wireless audio device (e.g., the first wireless audio device 1102-1) in the pair of (or in both) the wireless audio devices 1102-1 and 1102-2, the first wireless audio device 1102-1 may transfer (relay) the noise cancelling activation control signal to the second wireless audio device 1102-2, and the audio data may be transferred via a sniffing scheme performed by the second wireless audio devices 1102-2.

Referring to FIG. 11B, the mobile electronic device 1001 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., a smartphone) according to an embodiment may execute an application, and may identify a user input (e.g., an audio data reproduction request) (control (play)) using a control interface of the application. Based on an audio reproduction request, the mobile electronic device 1001 according to an embodiment may transmit a noise cancelling activation control signal and audio data to the first wireless audio device 1102-1 (primary (L)) in the pair of (or in both) the wireless audio devices 1102-1 and 1102-2. The first wireless audio device 1102-1 (primary (L)) according to an embodiment may transfer the received noise cancelling activation control signal (noise cancelling) to the second wireless audio device 1102-2 (secondary (R)) via separate communication with the second wireless audio device 1102-2 (secondary (R)). The second wireless audio device 1102-2 (secondary (R)) according to an embodiment may receive the audio data according to a (sniffing) scheme of eavesdropping on the audio data transmitted from the mobile electronic device 1001 to the first wireless audio device 1102-1 (primary (L)), and may receive the noise cancelling activation control signal from the first wireless audio device 1102-1 (primary (L)). The second wireless audio device 1102-2 (secondary (R)) according to an embodiment may perform reception according to a (sniffing) scheme that eavesdrops on the audio data and the noise cancelling activation control signal (noise cancelling) transmitted from the mobile electronic device 1001 to the first wireless audio device 1102-1 (primary (L)).

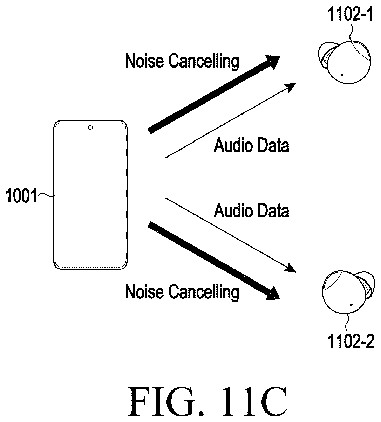

FIG. 11C is a diagram illustrating an example of transmitting a noise cancelling activation signal and audio data to each in a pair of wireless audio devices by a mobile electronic device according to an embodiment of the disclosure.

FIG. 11C illustrates an example in which the mobile electronic device 1001 transmits a noise cancelling activation control signal (noise cancelling) and audio data to each in a pair of (or both) the wireless audio devices 1102-1 and 1102-2 according to a BLE audio transmission scheme.

Referring to FIG. 11C, the mobile electronic device 1001 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., a smartphone) according to an embodiment may execute an application, and may identify a user input (e.g., an audio data reproduction request) (control (plate)) using a control interface of the application. The mobile electronic device 1001 according to an embodiment may establish communication connection to each of the wireless audio devices 1102-1 and 1102-2. Based on an audio reproduction request, the mobile electronic device 1001 according to an embodiment may transmit a noise cancelling activation control signal (noise cancelling) and audio data to each in the pair of (in both) the wireless audio devices 1102-1 and 1102-2.

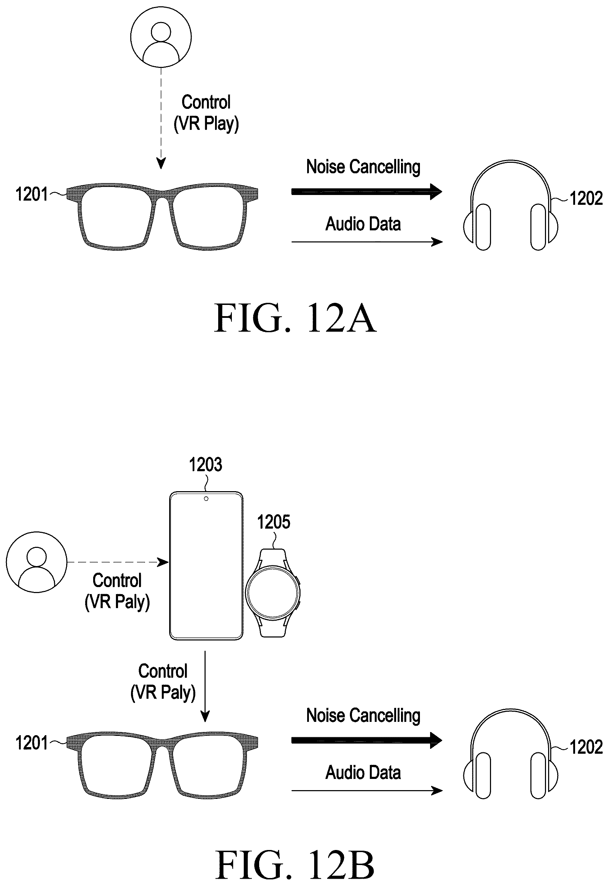

FIG. 12A is a diagram illustrating an example of, when a VR function is activated, transmitting a noise cancelling activation control signal and audio data to a wireless audio device, by an XR electronic device according to an embodiment of the disclosure.

Referring to FIG. 12A, an XR electronic device 1201 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., XR glasses) according to an embodiment may receive (or identify) a user input (control (VR play)) corresponding to a VR content reproduction request. Based on the VR content reproduction request, the XR electronic device 1201 according to an embodiment may transmit a noise cancelling function activation control signal (noise cancelling) and audio data to the wireless audio device 1202 (e.g., a wireless headset). The wireless audio device 1202 according to an embodiment may receive the noise cancelling function activation control signal and audio data from the XR electronic device 1201, and may activate a noise cancelling function, when reproducing audio data.

FIG. 12B is a diagram illustrating an example of transmitting, based on a control signal from another electronic device, a noise cancelling activation control signal and audio data to a wireless audio device, by an XR electronic device according to an embodiment of the disclosure.

Referring to FIG. 12B, an XR electronic device 1201 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., XR glasses) according to an embodiment may receive (or identify) a control signal (control (VR play)) corresponding to a VR content reproduction request from another electronic device (e.g., a smartphone 1203 or a smart watch 1205)) connected via separate communication. Based on the VR content reproduction request, the XR electronic device 1201 according to an embodiment may transmit a noise cancelling function activation control signal (noise cancelling) and audio data to the wireless audio device 1202 (e.g., wireless headset). Based on the VR content reproduction request, the XR electronic device 1201 according to an embodiment may transmit only a noise cancelling function activation control signal (noise cancelling) to the wireless audio device 1202, and the wireless audio device 1202 may receive audio data from the smartphone 1203 or the smart watch 1205. The wireless audio device 1202 according to an embodiment may receive the noise cancelling function activation control signal and audio data from the XR electronic device 1201, and may activate a noise cancelling function, when reproducing audio data.

Although not illustrated in FIG. 12B, when autonomously receiving a VR content reproduction request, the XR electronic device 1201 according to an embodiment may transmit information indicating the reception of the VR content reproduction request (or operation information indicating that a VR content is being reproduced in response to the VR content reproduction request) to another electronic device (e.g., the smartphone 1203 or the smart watch 1205) connected via communication, and the other electronic device (e.g., the smartphone 1203 or the smart watch 1205) may transmit a noise cancelling function activation control signal and/or audio data to the wireless audio device 1202 upon receiving, from the XR electronic device 1201, the information indicating reception of the VR content reproduction request. For example, the smartphone 1203 may transmit a noise cancelling function activation control signal and audio data to the wireless audio device 1202. As another example, the smart watch 1205 may transmit a noise cancelling function activation control signal and audio data to the wireless audio device 1202. As another example, the smartphone 1203 may transmit a noise cancelling function activation control signal to the wireless audio device 1202, and the smart watch 1205 may transmit audio data to the wireless audio device 1202. As another example, the smart watch 1205 may transmit a noise cancelling function activation control signal to the wireless audio device 1202, and the smartphone 1203 may transmit audio data to the wireless audio device 1202.

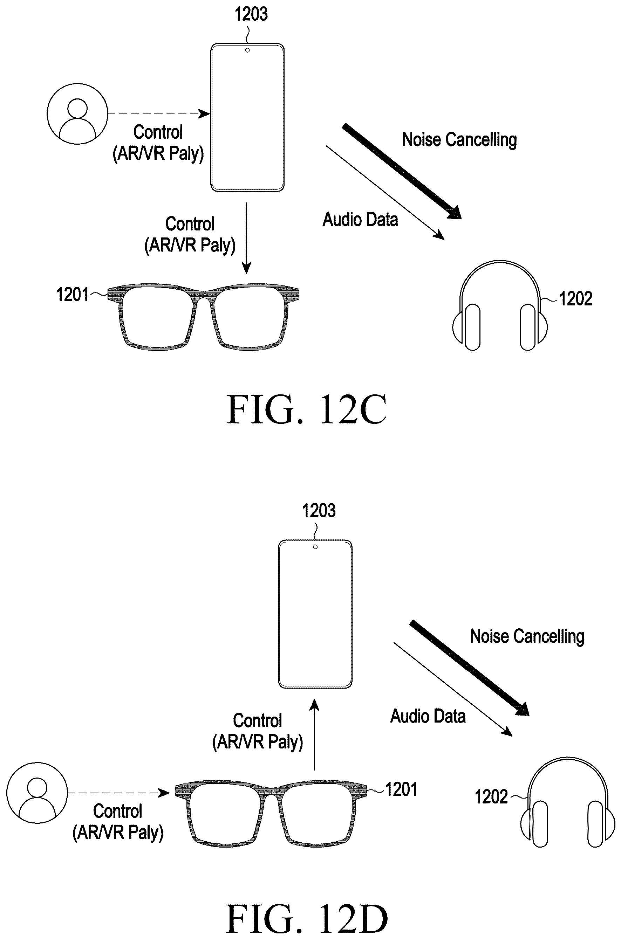

FIG. 12C is a diagram illustrating an example of controlling an XR electronic device, and transmitting a noise cancelling activation control signal, a noise cancelling deactivation control signal, or an ambient sound listening function control signal, and audio data to a wireless audio device, by a mobile electronic device according to an embodiment of the disclosure.

Referring to FIG. 12C, a mobile electronic device 1203 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., a smartphone) according to an embodiment may receive (or identify) a user input (control (AR play or VR play)) corresponding to an AR content reproduction request or a VR content reproduction request. Based on the user input corresponding to the AR content reproduction request or the VR content reproduction request, the mobile electronic device 1203 according to an embodiment may transmit an AR content reproduction request or VR content reproduction request (control (AR play or VR play)) to the XR electronic device 1201 (e.g., XR glasses), and may transmit, to the wireless audio device 1202 (e.g., a wireless headset), a noise cancelling function activation control signal, a noise cancelling function deactivation control signal (noise cancelling), or an ambient sound listening function control signal, and audio data. The mobile electronic device 1203 according to an embodiment may transmit a noise cancelling function activation control signal, a noise cancelling function deactivation control signal (noise cancelling), or an ambient sound listening function control signal to the wireless audio device 1202, and may perform operation so that audio data is transmitted from the XR electronic device 1201.

Based on the user input corresponding to the AR content reproduction request, the mobile electronic device 1203 according to an embodiment may transmit an AR content reproduction request (control (AR play)) to the XR electronic device 1201 (e.g., XR glasses), and may transmit a noise cancelling function deactivation control signal or an ambient sound listening function control signal, and audio data to the wireless audio device 1202 (e.g., a wireless headset). Based on the user input corresponding to the VR content reproduction request, the mobile electronic device 1203 according to an embodiment may transmit a VR content reproduction request (control (VR play)) to the XR electronic device 1201 (e.g., XR glasses), and may transmit a noise cancelling function activation control signal and audio data to the wireless audio device 1202 (e.g., a wireless headset).

FIG. 12D is a diagram illustrating an example of transmitting a noise cancelling activation control signal, a noise cancelling deactivation control signal, or an ambient sound listening function control signal, and audio data to a wireless audio device via a mobile electronic device, by an XR electronic device according to an embodiment of the disclosure.

Referring to FIG. 12D, the XR electronic device 1201 (e.g., the electronic device 101 of FIG. 1, the electronic device 201 of FIG. 2, the mobile electronic device 300 of FIG. 3, the XR electronic device 400 of FIG. 4A, or the electronic device 500 of FIG. 5) (e.g., XR glasses) according to an embodiment may receive (or identify) a user input (control (AR play or VR play)) corresponding to an AR content reproduction request or a VR content reproduction request. Based on the user input corresponding to the AR content reproduction request or the VR content reproduction request, the XR electronic device 1201 according to an embodiment may perform an operation of reproducing an AR content or an operation of reproducing a VR content, and may transmit a control signal (control (AR play or VR play) to the mobile electronic device 1203, so as to transmit a noise cancelling function activation control signal, a noise cancelling function deactivation control signal (noise cancelling), or an ambient sound listening function control signal, and audio data associated with the AR content or VR content to the wireless audio device 1202 (e.g., a wireless headset). Based on the control performed by the XR electronic device 1201, the mobile electronic device 1203 according to an embodiment may transmit a noise cancelling function deactivation control signal or an ambient sound listening control signal, and audio data to the wireless audio device 1202 (e.g., a wireless headset), when reproducing an AR content, and may transmit a noise cancelling function activation control signal and audio data to the wireless audio device 1202 (e.g., a wireless headset), when reproducing a VR content. The mobile electronic device 1203 according to an embodiment may transmit only a noise cancelling function activation control signal, a noise cancelling function deactivation control signal (noise cancelling), or an ambient sound listening function control signal to the wireless audio device 1202, and audio data may be transmitted from the XR electronic device 1201.

The electronic device according to various embodiments disclosed herein may be one of various types of electronic devices. The electronic devices may include, for example, a portable communication device(e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. It is to be understood that a singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software(e.g., the program 140) including one or more instructions that are stored in a storage medium(e.g., the internal memory 136 or external memory 138) that is readable by a machine(e.g., the electronic device 101). For example, a processor(e.g., the processor 120) of the machine(e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

According to an embodiment, one or more non-transitory computer-readable storage media storing one or more computer programs including computer-executable instructions that, when executed by one or more processors (e.g., the processor 120 of FIG. 1 or the processor 520 of FIG. 5) of an electronic device (e.g., the electronic device 101 of FIG. 1, the electronic device 201 of FIG. 2, or the electronic device 500 of FIG. 5) individually or collectively, cause the electronic device to perform operations are provided. The operations include performing, by the electronic device, communication with a wireless audio device outside the electronic device via a communication circuitry (570), based on a request for audio data transmission to the wireless audio device, identifying, by the electronic device, activation or deactivation of a noise cancelling function of the wireless audio device, in case that the activation of the noise cancelling function is identified, transmitting, by the electronic device, a noise cancelling function activation control signal and the audio data to the wireless audio device, and in case that the deactivation of the noise cancelling function is identified, transmitting, by the electronic device, a noise cancelling deactivation control signal and the audio data to the wireless audio device.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
communication circuitry;
memory storing one or more computer programs; and
one or more processors communicatively coupled to the communication circuitry and the memory,
wherein the one or more computer programs include computer-executable instructions that, when executed by the one or more processors individually or collectively, cause the electronic device to:
communicate with a wireless audio device outside the electronic device through the communication circuitry,
identify an activation or a deactivation of a noise canceling function of the wireless audio device based on a request to transmit audio data to the wireless audio device,
in case that the activation of the noise canceling function is identified, transmit a control signal for the activation of the noise canceling function and the audio data to the wireless audio device, and
in case that the deactivation of the noise canceling function is identified, transmit a control signal for the deactivation of the noise canceling function and the audio data to the wireless audio device.

2. The electronic device of claim 1, wherein the one or more computer programs further include computer-executable instructions that, when executed by the one or more processors individually or collectively, cause the electronic device to:
identify an activation of an augmented reality (AR) function or an activation of a virtual reality (VR) function based on the request to transmit the audio data to the wireless audio device,
wherein, to identify the activation or the deactivation of the noise canceling function of the wireless audio device, the one or more computer programs further include computer-executable instructions that, when executed by the one or more processors individually or collectively, cause the electronic device to:
in case that the activation of the AR function is identified, identify the deactivation of the noise canceling function, and
in case that the activation of the VR function is identified, identify the activation of the noise canceling function.

3. The electronic device of claim 2, further comprising:
a display;
at least one camera;
a microphone;
a sensor,
wherein the one or more processors are communicatively coupled to the display, the at least one camera, the microphone, and the sensor, and
wherein the one or more computer programs include computer-executable instructions that, when executed by the one or more processors individually or collectively, cause the electronic device to:
perform at least part of:
obtaining first information associated with an object in the outside of the electronic device by obtaining an image associated with the outside of the electronic device by using the at least one camera while performing the VR function,
obtaining second information associated with a sound from the outside of the electronic device by obtaining the sound from the outside of the electronic device by using the microphone while performing the VR function,
obtaining third information related to operation of an external electronic device by using operation information of the external electronic device by obtaining the operation information of the external electronic device from the external electronic device connected with the electronic device through the communication circuitry while performing the VR function, and
obtaining fourth information related to external environment of the electronic device by using sensing information obtained by the sensor while performing the VR function.

4. The electronic device of claim 3, wherein the one or more computer programs include computer-executable instructions that, when executed by the one or more processors individually or collectively, cause the electronic device to:
identify whether a specified first condition is satisfied based on at least one of the first information, the second information, the third information, or the fourth information, and
based on the specified first condition being satisfied, display visual information corresponding to the specified first condition on the display, or transmit a signal to control the wireless audio device to lower a level of the noise canceling function.

5. The electronic device of claim 3, wherein the one or more computer programs include computer-executable instructions that, when executed by the one or more processors individually or collectively, cause the electronic device to:
identify whether a specified second condition is satisfied based on at least one of the first information, the second information, the third information or the fourth information, and
based on the specified second condition being satisfied, stop performing the VR function and transmit a signal to control the wireless audio device to deactivate the noise canceling function or a signal to control the wireless audio device to perform an ambient sound listening function.

6. The electronic device of claim 5, wherein the one or more computer programs include computer-executable instructions that, when executed by the one or more processors individually or collectively, cause the electronic device to:
based on the specified second condition being satisfied, activate the AR function after stopping the VR function.

7. A wireless audio device comprising:
communication circuitry;
audio circuitry;
noise canceling circuitry;
memory storing one or more computer programs; and
one or more processors communicatively coupled to the communication circuitry, the audio circuity, the noise canceling circuitry, and the memory,
wherein the one or more computer programs include computer-executable instructions that, when executed by the one or more processors individually or collectively, cause wireless audio device to:
perform communication with an electronic device outside the wireless audio device through the communication circuitry,
receive audio data from the electronic device,
receive a control signal from the electronic device,
in case that the control signal is a noise canceling function activation control signal, control the noise canceling circuitry to activate a noise canceling function when the audio data is played, and
in case that the control signal is a noise canceling function deactivation control signal, control the noise canceling circuitry to deactivate the noise canceling function.

8. An electronic device comprising:
communication circuitry;
memory storing one or more computer programs; and
one or more processors communicatively coupled to the communication circuitry and the memory,
wherein the one or more computer programs include computer-executable instructions that, when executed by the one or more processors individually or collectively, cause the electronic device to:
activate a virtual reality (VR) function based on a request for performing the VR function, while performing an augmented reality (AR) function, or activate the AR function based on a request for performing the AR function, while performing the VR function, and
in case that the VR function is activated, transmit a noise cancelling function activation control signal to a wireless audio device connected to the electronic device by using the communication circuitry, or
in case that the AR function is activated, transmit a noise cancelling deactivation control signal or an ambient sound listening control signal to the wireless audio device connected to the electronic device by using the communication circuitry.

9. The electronic device of claim 8, further comprising:
a display;
at least one camera;
a microphone; and
a sensor,
wherein the one or more processors are communicatively coupled to the display, the at least one camera, the microphone, and the sensor, and
wherein the one or more computer programs include computer-executable instructions that, when executed by the one or more processors individually or collectively, cause the electronic device to:
obtain information associated with an ambient environment of the electronic device using at least one among the at least one camera, the microphone, the communication circuitry, and the sensor while performing the VR function, and
wherein the information associated with the ambient environment of the electronic device includes at least part of:
first information, which is associated with an object outside the electronic device, obtained based on an image captured by the at least one camera,
second information, which is associated with a sound the outside the electronic device, obtained via the microphone,
third information, which is associated with an operation of an external electronic device, received from the external electronic device connected to the electronic device via the communication circuitry, and
fourth information, which is associated with an external environment of the electronic device, obtained using sensing information obtained via the sensor.

10. The electronic device of claim 9, wherein the instructions one or more computer programs include computer-executable instructions that, when executed by the one or more processors individually or collectively, cause the electronic device to:
in case that a specified first condition is satisfied based on the information associated with the ambient environment of the electronic device, display, on the display, visual information corresponding to the specified first condition, or transmit, to the wireless audio device, a signal that performs control so as to lower a level of the noise cancelling function, andin case that a specified second condition being satisfied based on the information associated with the ambient environment of the electronic device, stop performing the VR function, and transmit the noise cancelling function deactivation control signal or the ambient sound listening function control signal to the wireless audio device.

11. A method performed by an electronic device of controlling a noise cancelling function of a wireless audio device, the method comprising:
performing, by the electronic device, communication with the wireless audio device outside the electronic device via communication circuitry;
based on a request for audio data transmission to the wireless audio device, identifying, by the electronic device, activation or deactivation of a noise cancelling function of the wireless audio device;
in case that the activation of the noise cancelling function is identified, transmitting, by the electronic device, a noise cancelling function activation control signal and the audio data to the wireless audio device; and
in case that the deactivation of the noise cancelling function is identified, transmitting, by the electronic device, a noise cancelling deactivation control signal and the audio data to the wireless audio device.

12. The method of claim 11, further comprising:
based on the request for audio data transmission to the wireless audio device, identifying augmented reality (AR) function activation or virtual reality (VR) function activation,
wherein the identifying of the activation or the deactivation of the noise canceling function of the wireless audio device comprises:
in case that the activation of the AR function is identified, identifying the deactivation of the noise cancelling function; and
in case that the activation of the VR function is identified, identifying the activation of the noise cancelling function.

13. The method of claim 12, further comprising:
based on the VR function activation, performing a VR function; and
obtaining information associated with an ambient environment of the electronic device by using at least one among at least one camera, a microphone, the communication circuitry, and a sensor, while performing the VR function, and
wherein the information associated with the ambient environment of the electronic device comprises at least part of:
first information, which is associated with an object outside the electronic device, obtained based on an image captured via the at least one camera,
second information, which is associated with a sound the outside the electronic device, obtained via the microphone,
third information, which is associated with an operation of an external electronic device, received from the external electronic device connected to the electronic device via the communication circuitry, and
fourth information, which is associated with an external environment of the electronic device, obtained by using sensing information obtained via the sensor.

14. The method of claim 13, further comprising:
in case that a specified first condition is satisfied based on the information associated with the ambient environment of the electronic device, displaying, on a display, visual information corresponding to the specified first condition, or transmitting, to the wireless audio device, a signal that performs control so as to lower a level of the noise cancelling function; and
in case that a specified second condition is satisfied based on the information associated with the ambient environment of the electronic device, stopping performing of the VR function, and transmitting a noise cancelling function deactivation control signal or an ambient sound listening function control signal to the wireless audio device.

15. One or more non-transitory computer-readable storage media storing one or more computer programs including computer-executable instructions, wherein the computer-executable instructions, when executed by one or more processors of an electronic device individually or collectively, cause the electronic device to perform operations, the operations comprising:
performing, by the electronic device, communication with a wireless audio device outside the electronic device via communication circuitry;
based on a request for audio data transmission to the wireless audio device, identifying, by the electronic device, activation or deactivation of a noise cancelling function of the wireless audio device;
in case that the activation of the noise cancelling function is identified, transmitting, by the electronic device, a noise cancelling function activation control signal and the audio data to the wireless audio device; and
in case that the deactivation of the noise cancelling function is identified, transmitting, by the electronic device, a noise cancelling deactivation control signal and the audio data to the wireless audio device.
